(19)

**Europäisches Patentamt**
**European Patent Office**
**Office européen des brevets**

(11) **EP 4 300 028 B1**

(12) **EUROPEAN PATENT SPECIFICATION**

(45) Date of publication and mention
of the grant of the patent:
**16.04.2025  Bulletin 2025/16**

(21) Application number: **23382343.4**

(22) Date of filing: **14.04.2023**

(51) International Patent Classification (IPC):
*F41H 3/00* (2006.01)    *G02B 5/20* (2006.01)
*G02B 5/32* (2006.01)    *G03H 1/00* (2006.01)
*F41H 3/02* (2006.01)    *G03H 1/02* (2006.01)
G03H 1/22 (2006.01)    G03H 1/26 (2006.01)
G03H 1/28 (2006.01)    G03H 1/30 (2006.01)

(52) Cooperative Patent Classification (CPC):
**G03H 1/0005; F41H 3/02; G02B 5/203; G02B 5/32;**
**G03H 1/0256;** G03H 1/28; G03H 2001/2263;
G03H 2001/2284; G03H 2001/2615;
G03H 2001/303

(54) **HOLOGRAPHIC SYSTEM AND METHOD OF CAMOUFLAGE, CONCEALMENT AND DEFENSE**

HOLOGRAPHISCHES SYSTEM UND VERFAHREN ZUR TARNUNG, VERDECKUNG UND
VERTEIDIGUNG

SYSTÈME HOLOGRAPHIQUE ET MÉTHODE DE CAMOUFLAGE, DE DISSIMULATION ET DE
DÉFENSE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**03.01.2024  Bulletin 2024/01**

(73) Proprietor: **Singular Control Energy, SL**
**03400 Villena (Alicante) (ES)**

(72) Inventor: **Mas Abellán, Pedro**
**03400 Villena (Alicante) (ES)**

(74) Representative: **Sahuquillo Huerta, Jesús**
**Jesana Patentes, SL**
**Jesana iP**
**C/ Huesca 5 ,Oficina 2**
**46001 Valencia (ES)**

(56) References cited:
**RU-U1- 27 949        US-A- 5 985 381**
**US-A1- 2015 268 003**

- ZHENG GENG ET AL: "Design of low-cost
photonic crystal based three-dimensional
invisibility cloak", MICRO- AND
NANOTECHNOLOGY SENSORS, SYSTEMS, AND
APPLICATIONS III, SPIE, 1000 20TH ST.
BELLINGHAM WA 98225-6705 USA, vol. 8031, no.
1, 13 May 2011 (2011-05-13), pages 1 - 6,
XP060009924, DOI: 10.1117/12.886430
- YUANKUN LIN ET AL: "Five beam holographic
lithography for simultaneous fabrication of three
dimensional photonic crystal templates and line
defects using phase tunable diffractive optical
element", OPTICS EXPRESS OPTICAL SOCIETY
OF AMERICA USA, vol. 17, no. 19, 14 September
2009 (2009-09-14), pages 16625 - 16631,
XP002810399, ISSN: 1094-4087, DOI: 10.1364/
OE.17.016625
- XIN XIE ET AL: "Plasmonic Metasurfaces for
Simultaneous Thermal Infrared Invisibility and
Holographic Illusion", ADVANCED FUNCTIONAL
MATERIALS, WILEY - V C H VERLAG GMBH &
CO. KGAA, DE, vol. 28, no. 14, 31 January 2018
(2018-01-31), pages n/a, XP072410049, ISSN:
1616-301X, DOI: 10.1002/ADFM.201706673
- DATABASE EPODOC EUROPEAN PATENT
OFFICE, THE HAGUE, NL; SERPUKHOV HIGHER
MILITRAY COMMAND AND ENGINEERING
SCHOOL: "MASKING DEVICE", XP002810415,
Database accession no. RU-2002117770-U

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## Technical field

The present invention relates to a holographic system and a method of camouflage or concealment. The object of the invention is the use of holographic technology in order to obtain dynamic camouflage or concealment systems for objects or persons. It is, therefore, an object of the present invention to develop a holographic camouflage, concealment and defense or optical shielding system, which provides a passive and dynamic optical camouflage, by means of the use of holographic optical elements.

## State of the art

In various fields of technology, camouflage and concealment of different devices, systems or elements is necessary. For example, the state of the art has been developing numerous efforts to achieve technological advances to increase the stealth characteristics of the different military units, both human and mechanized, with the aim of delaying the detection and identification of the units as much as possible. In all of them, from the beginning it has been tried to imitate the techniques used in the best possible test bench, nature, which has been perfecting the adaptability of the species for their survival for thousands of years, which is why many devices, measures or applications developed in different sectors, try to artificially achieve the characteristics developed by many of the living beings over millions of years of evolution. In this field, there are several concepts that may be a priori similar, which can lead to confusion. Terms such as invisibility, concealment, mimicry, or camouflage (crypsis) must be correctly differentiated, since each of them has a different objective, a different result, and an independent technological development. Invisibility is the quality of a physical body (visible) of not being seen in normal light conditions for a supposed observer. Concealment is the covering up of someone or something in order to prevent it from being seen or known. Mimicry is based on the adoption of an appearance similar to living beings in the environment while crypsis or camouflage is about adopting an appearance similar to one's own environment.

## Mimicry

From the concepts mentioned above, some living beings choose to develop mimicry techniques as a defense mechanism to confuse or scare away predators, pretending to be more dangerous species than they are, for example, being poisonous, having barbs, etc. In the defense field, this technique has been commonly used in motorized units, tanks, airplanes, or ships, which are painted with certain silhouettes and colors for two purposes. The first is to confuse the enemy in identifying the type of unit, making him believe that the unit is not what it really is, but that it is another type of different unit, for example, painting combat ships with silhouettes or colors that make him believe that it is another type of ship or a smaller ship, installing accessories that change the tracks left by a tank to simulate those of a truck, etc. A second purpose is to confuse the enemy with the situation or disposition of the unit, trying to confuse the enemy with the prediction of its possible movements of stalking or escape, as, for example, to paint a cockpit of an airplane in the inferior part of the fuselage, which will confuse the enemy in calculation of the trajectories that can make the airplane to attack or to evade.

## Concealment

Concealment is used by some living beings to hide from predators or prey, for example, as some cephalopods use stones in front of their caves to hide, or as lions hide in the undergrowth in their hunting strategies, etc. The concealment technique does not try to be seen, as could be invisibility or camouflage, but it tries to make something else be seen that is more usual or common in the operating environment, thus not producing any significant alert or, if it were to occur, it would delay the time of it. In the military field, this technique is well known, for example, how soldiers hide under the undergrowth, how they cover their weapons with undergrowth branches of native flora or artificial textiles that simulate such flora or how they hide checkpoints and camps under tarpaulins or manufactured fabrics that simulate the foliage of the environment and hide the units and personnel under it.

As early as the 6th century B.C., Sun-Tzu, through his teachings, wrote one of the most famous treatises on military strategy of all time: The Art of War. In one of the most famous and profound quotes of the book, "know your enemy and knowyourself, and you will be victorious in a thousand battles", he emphasized the importance of information in the field of military operations.

Throughout history, all countries have been developing endless efforts to obtain relevant information from the enemy, from the participation of spies to the most modern systems for capturing satellite images, they have been using a myriad of surveillance and information strategies, reaching a clear conclusion, the best view of the enemy has always been from above. In the last two centuries, coinciding with the industrial and technological revolutions of the modern age, aerial surveillance systems have been evolving.

In the early 1790s, aerial surveillance systems were introduced through the use of hydrogen-filled balloons tethered to the ground by wires and with baskets containing two soldiers, one taking control of a telescope and the other signaling observations to the ground by a flag code. This perspective permitted ground reconnaissance of up to about 50 miles on a clear day.

During the Spanish-American War of 1898, a U.S. Army corporal named William Eddy introduced a kite-mounted camera, based on the experiences of Douglas Archibald, to take bird's-eye view photographs of enemy positions, resulting in the first military aerial surveillance photos in history.

Carrier pigeons played a vital role in World War I communications. The German army, going further, experimented with avian photographers, mounting cameras on pigeons, however, the photos were blurred due to the bird's movement and the pigeons were difficult to control.

Aircraft first went to war during the First World War. Initially they were used for reconnaissance missions, using a two-seater aircraft carrying a pilot and an observer who sketched the disposition of enemy troops with the aid of binoculars. Later, the Eastman Kodak Company designed some of the first aerial cameras that were mounted on the side of an airplane to take aerial photographs, initiating spy plane technology. In World War **II,** surveillance aircraft evolved and, to save time in getting reconnaissance information ready, began to carry a portable darkroom on board to develop and analyze aerial photographs in near real time.

During the Cold War, due to the risk posed by spy planes of being hit and shot down by Soviet Union anti-aircraft systems, the United States developed the U2, which could fly at 70,000 feet, more than twice the cruising altitude of today's commercial aircraft and far from enemy anti-aircraft systems. This fact led to a major development in the quality and accuracy of visual remote sensing systems; as an example, the U2 was equipped with a camera capable of capturing details as small as 2.5 feet wide from incredibly high altitudes.

Due to the evolution of anti-aircraft systems, which considerably increased their range, spying on aircraft flying over enemy territory was no longer an infallible strategy. With the appearance of Sputnik by the Soviet Union and the beginning of the space race, the intelligence agencies of nations began to compete to put the first spy satellites into orbit. After a race to develop spy satellites that took photographs, by the end of the Cold War the United States had deployed a spy satellite that could capture images of objects less than two feet wide from up to 100 miles above the earth's surface.

Since then, remote sensing systems have evolved considerably, increasing the accuracy and sharpness of the photographs taken. In recent times, due to inclement weather, optical distortions caused by the atmosphere, etc., to which space missions are subjected to take pictures by satellites, it has been decided to develop image acquisition systems at a lower altitude, leading to the emergence of optical systems for capturing images on weather balloons and the emergence of drones or *unmanned aerial vehicles* (UAV) in aerial surveillance missions.

The governments of the different nations of the world are not only developing numerous aerial surveillance systems that give them a strategic advantage over the rest, but they must also obtain countermeasures against these surveillance devices and, therefore, be opaque to them. Currently, there are civilian applications where most of the inhabited areas of the planet have been photographed from satellites. This poses a great threat to the privacy of armies around the world. As an example, from Spain you can see how military areas belonging to Spanish army bases are blurred or pixelated. This is a treatment that must be carried out by armies around the world with the companies that own the satellites, however, it poses a serious threat to national security in case of armed conflict. Faced with this challenge of safeguarding the privacy of strategic government facilities or units, governments try to conceal or camouflage such units or facilities from aerial or space surveillance systems. The most common measure taken in the face of this challenge is usually to hide the units under camouflaged structures or bunkers, the construction of subway bases and facilities or to camouflage them by means of camouflage devices or structures, such as fabrics, tarpaulins, etc.

The system proposed in DE4025388C1, although being a system which might a priori appear analogous with part of the invention, actually describes a system for generating dummy targets or decoys by using a hologram illuminated by a coherent beam to provide a holographic image of the target. The hologram can be attached to the target to be protected, with the holographic image of the target reconstructed at a safe distance from the actual target when the hologram is illuminated by a laser beam. The primary use of this invention is to protect the military target within the battlefield, by creating a spaced simulated target or camouflage, without impact damage or practice ammunition and can be used for target practice.

The same approach is presented in US9025226B2, which describes a holographic structure, system and method projecting a grayscale image in a narrow **IR** spectral band that is related to a broadband thermal signature of an object, i.e., an infrared decoy. The projected grayscale image, when integrated over the broadband, forms a decoy that approximates the object's thermal signature or a mask that obscures the object's thermal signature. The projected image is a phase-tuned recording of a desired far-field projection. **In** different embodiments, the projected image is a "positive" or "negative" image of the object's thermal signature, a difference image between the thermal signatures of a fake object and the object, or a camouflage image of random features having approximately the same spacing. frequency as the object's thermal signature. The goal is to confuse or deceive, even for a brief period of time, the warfare or surveillance system or human observer using a broadband **IR** sensor to acquire and view thermal images of the scene.

*Invisibility*

Invisibility is a property that has always been pursued in the military field in order to provide a considerable strategic advantage to its various units. However, to date, it has not yet been possible to achieve this ability. The word invisibility is formed from Latin roots and means "the quality of not being able to be seen". Although the idea may be somewhat confusing, similar or equivalent to the term camouflage, the way to achieve it is completely different in both concepts, as well as the technologies, mechanisms or strategies to achieve it, therefore, it is convenient to differentiate both approaches with a more detailed introduction. The concept of invisibility, in general, has always been referred to the human being and its receptor system, the eyes, although the concept can be extended when talking about technological innovations.

Numerous advances have been made on the subject of invisibility or techniques that seek something similar, i.e., the non-detection of an object despite its physical presence. However, it is worth clarifying the operation and, above all, its operating band of the electromagnetic spectrum, since depending on the electromagnetic signal that is operated, the application or operation could be different despite having the same purpose, "invisibility". The light by which we are guided in the process of vision is an electromagnetic wave. Like it, there are other electromagnetic waves, which differ from each other in their size (wavelength), therefore, according to their wavelength (or frequency) electromagnetic waves can be classified. The electromagnetic spectrum consists of a classification and graphic distribution of the type of electromagnetic waves according to their wavelength.

The electromagnetic spectrum is composed of different electromagnetic bands, which classify the type of wave according to the range of wavelengths they have. Generally speaking, electromagnetic waves can be classified into the following groups: cosmic rays; gamma rays; X-rays; ultraviolet; visible spectrum; infrared; microwaves and radio waves. Within each group, the waves belonging to said band can be classified in turn by means of subgroups, however, we will only enter into said subclassifications in the bands of interest useful for the explanation of this invention.

*Atmospheric windows*

When solar radiation passes through the atmosphere, the presence of the various particles that compose it (ozone, water, carbon dioxide and other molecules) causes the absorption of certain radiation and the blocking of others. This fact has allowed the appearance of life on our planet because it prevents the arrival of harmful radiation (incompatible with life) to the Earth's crust. As a result, only specific portions of the electromagnetic spectrum can propagate through the atmosphere. This phenomenon is known as the Earth's "atmospheric window". In summary, an atmospheric window is the portion of the electromagnetic spectrum that can be transmitted through the atmosphere, and an absorption band is the portion of the electromagnetic spectrum that is blocked, making the atmosphere opaque to these radiations. This concept is of vital importance for a general understanding of the rationale for future technological developments in remote sensing, as engineers must always take atmospheric windows into account when designing a device, emitter or sensor for telecommunications or remote sensing. Remote sensing techniques, both active (signal emitted by satellite or aircraft, reflection detected by the sensor) and passive (reflection of sunlight detected by the sensor), work with wavelength ranges contained in atmospheric windows. The optical, infrared and radio windows comprise the three main atmospheric windows. Because the highest intensity of electromagnetic radiation emitted by the Sun reaches the Earth's surface in the visible spectrum band, it has caused living beings (and especially humans), through evolution, to develop natural sensors adapted to these wavelengths, the eyes, to take advantage of it. Light, therefore, is what we call electromagnetic waves between 300 nm and 700 nm in wavelength, belonging to the visible spectrum of the electromagnetic spectrum.

In living beings, sight is an interpretation by the brain of the environment, thanks to the information provided through the capture of light, which brings with it information about the environment. Basically, for an object to be seen, light must fall on it and "bounce" back to the eyes, providing us with information about the object. For an object to be considered invisible, it would have to have the ability to not re-emit (bounce) light back to the eyes, so it could not be seen despite its physical presence. In nature, invisibility has not been achieved by any living being (as far as we know). The closest we could find are living beings with a high degree of transparency, such as some types of jellyfish, to which the light passes through them almost completely making it difficult to locate them and, therefore, they could be considered as "almost invisible".

In technological devices, on the other hand, depending on the application, it is possible to work with one type of wave or another. Talking about invisibility is not the same as talking about an application that uses the visible spectrum, infrared or microwaves, since such invisibility will be effective only in that band of the spectrum, not being invisible for the rest of the electromagnetic spectrum. More generally, in order to speak of invisibility in a broad band of the electromagnetic spectrum, not only in the visible spectrum, but we should also change the concept of "vision" to "detection". In this more general way, we will henceforth refer to invisibility as undetectability. Basically, object detection occurs when a reference electromagnetic wave is incident on an object and is "reflected" (diffracted) back to a receiver, thus detecting the presence of the object. When we refer specifically to the human detection process (sight), objects are detected (seen) when the reference electromagnetic wave (light) strikes the object, is reflected and reaches our receiver (the eyes). To achieve undetectability, theoretically it should not be possible to alter the structure of the wavefront, by the object, the reference wave goes to the receiver. If it were by reflection, the aim would be not to reflect the wave, if it were by transmission, the reference wave should not be blocked. In both cases a common principle of operation would be maintained, the manipulation of the reference wave by the object.

*Undetectability by transmission: cloaking*

The term cloaking has been read in recent times in the press as referring to devices that pursue invisibility, however, the concept is extremely broad and there are several ways in which they try to achieve it. In general, *cloaking* would try to absorb or redirect the electromagnetic waves around the object, making it undetectable. They would work by gently guiding light waves around objects, so that the waves follow their original paths as if nothing were obstructing them. The most recent advances in this regard focus on the concept of cloaking using metamaterials whose structure guides the electromagnetic wave around an object, sending it unperturbed in the same direction in which it entered. This technique basically consists of reconstructing a wave front, perturbed by the presence of an object. Much progress continues to be made in the development of new metamaterials. However, it has been possible to perform the experiment with very tiny objects and in the microwave band. Recent advances have attempted to extend the range from the infrared to the radio portions of the spectrum but have not yet been able to reach the visible spectrum.

Other approaches try to cover up an object by superimposing the surrounding environment on the back side by means of an image projected onto the object, trying to achieve the optical effect of invisibility. However, such approaches are not systems that specifically seek invisibility as we have defined it above, since they do not prevent the object from being seen by manipulating the electromagnetic wave, but should be framed as concealment devices, since they try to hide (cover) an object by means of a concealment based on visual projections of the rear environment. For this purpose, in general, the object is covered with a reflective material that returns an image projected on it, which will coincide with the object's environment. These approaches, due to the great limitations they present in the configuration and geometries to be used, are quite difficult to apply and, therefore, excessively limit their implementation in the real field of operations.

*Undetectability by reflection - Stealth technology*

The clearest example of undetectability by reflection is Stealth technology, which was first developed by Lockheed Martin in the early 1970s and has been refined ever since. The goal of Stealth technology is to make a unit, such as an aircraft, invisible (undetectable) to radar.

Actually, this technology was not developed or established to make an aircraft completely invisible to radar, since no aircraft ever built is capable of being completely invisible to radar. Stealth technology used or applied correctly tries to make the aircraft as unobservable as possible.

The primary system for locating and identifying aircraft at long distances since its discovery in World War II has been radar. A radar works in a similar general way to the vision process discussed above. It consists of a reference signal hitting an object and reflecting back to the receiver, detecting it. Radar is an active localization system, i.e., it generates its own reference signal, which is a radio signal belonging to the microwave band of the electromagnetic spectrum, so it is not surprising that most of the technological efforts for the reduction of radar detection concentrate on the electronic part of the electromagnetic spectrum. As a countermeasure to radar, stealth technology has been developed since the 1970s, which considers several factors and is quite complex. In general terms, it consists of minimizing the radar "echo" to make it more difficult for the receiver to receive it. Basically, it is based on two physical properties, *scattering,* by which they try to divert the radar signal that hits the unit to directions other than the origin and absorption, by coating these units with materials that absorb part of the microwave radiation (radar waves) reducing its return power.

In the *Stealth* scattering mechanism, on the one hand, the aim is to avoid returning the reference signal back to the radar receiver (priority direction). For this purpose, the shape of the aircraft is of vital importance, with special care being taken in designing the orientation and curvature of surfaces, the alignment of edges or the shielding of cavities and ducts, with the predominance of unusual designs based mainly on flat surfaces (avoiding curvatures), very sharp edges or jagged panel structures, which are designed so that the reflection lobes and the progressive wave return lobes point to low priority directions, i.e. the reflection (diffractions) of the signal is distributed in multiple directions, mainly avoiding the direction where the radar receiver is located. This reduces the strength of the signal that is reflected in the direction of the receiver, which reduces the radar signature of the aircraft and makes it less visible on the radar.

In the *Stealth* absorption mechanism, on the other hand, the aircraft is coated with a radar absorbing material (RAM, *RADIATION-ABSORBENT MATERIAL*). Such materials with special electromagnetic characteristics are called metamaterials and generally consist of a mixture of dielectric (non-conductive) materials (polymers) and conductive materials (e.g., carbon and iron oxide). When radar waves strike the coating, the conductive materials absorb the energy and convert it into heat, while the non-conductive materials prevent the heat from dissipating by absorbing it. This absorption of energy by the RAM material causes the reflected radar signal to have a lower intensity, which also reduces the radar signature of the aircraft and makes it less visible on the radar. These materials can be applied as coatings or incorporated into the aircraft structure.

The combination of both factors causes a considerable reduction of the signal reflected by the aircraft which, added to the logical attenuation in the atmosphere, can reach the receiver so weak that the signal-to-noise level is not high enough to overcome the threshold and is indistinguishable from the background noise, thus making it practically undetectable. But as with all technological developments, the invisibility (undetectability) of aircraft is not entirely complete. Stealth aircraft are not invisible; like any material element, they can be detected. The aim of the technology is to minimize the radar cross-section area (RCS, *RADAR CROSS-SECTION*), thus reducing the radar detection range, seeking to delay detection by the enemy as much as possible.

*Undetectability by infrared technology (IR)*

All objects with a temperature above absolute zero emit thermal energy in the form of radiation. This radiation is invisible to the human eye because it radiates at wavelengths in the infrared band of the electromagnetic spectrum, which is why it is often referred to as the heat region of the spectrum. Numerous electronic devices have been designed to be able to detect such infrared signals, these devices are called infrared (IR) sensors. As with the electromagnetic spectrum in general, not all infrared radiation is the same, nor is it used for the same applications. The infrared radiation band consists of electromagnetic signals with wavelengths ranging from 700 nm to 14 $\mu$m. Infrared signals are particularly important in the field of military operations since infrared detection and tracking systems complement radar systems by operating at different wavelengths. Like radar, which used the atmospheric window of radio waves, infrared is important in military applications because it is located in another atmospheric transmission band, the infrared window, where signals from a wide band of this part of the electromagnetic spectrum do not suffer as much attenuation due to the atmosphere, making it a useful band for remote sensing.

Because the infrared band called near infrared (NIR, 700nm to 900 nm), despite its nomenclature and the fact that it is invisible, is usually included in the visible spectrum, infrared radiation can be subclassified into three types of different wavelength ranges, the short-wavelength infrared (SWIR, *SHORT-WAVE INFRARED,* waves between 900 nm and 3 $\mu$m), mid-wavelength infrared (MWIR, *MEDIUM-WAVE INFRARED,* waves between 3 $\mu$m and 8 $\mu$m) and long-wavelength infrared (LWIR, *LONG-WAVE INFRARED,* waves between 8 $\mu$m

and 14 $\mu$m) and each of them is used in different military applications, such as infrared detection and tracking systems, which are based on night vision or thermographic vision systems.

Near infrared (NIR) and short wavelength infrared (SWIR) are often included within the same band. The dominant source of such radiation is the Sun and, therefore, the natural origin of this infrared emission is usually scattered solar radiation, formed by reflections of sunlight off terrestrial objects or gases in the atmosphere, which is why NIR and SWIR waves are sometimes referred to as "reflected infrared". Their atmospheric transmission is high since it coincides with a part of the atmospheric infrared window.

Night vision devices use this type of NIR and SWIR infrared radiation to operate by detecting photons from ambient light and transforming them into amplified electrical signals. Night vision works basically the same way as our eyes or a daytime camera does, so the visual image of SWIR is identical to the visual image of a black and white photo. Electromagnetic waves from daylight strike an object, reflecting off it, our detector (the eyes or the camera) picks up the reflected waves and converts it into an image, so without light there is no image. In the case of night vision, thanks to light amplifiers, the device is able to capture an image with very weak light, but there must always be a minimum of light. Such light for night vision will rely on waves belonging to the near infrared (NIR) and short wavelength infrared (SWIR). This band of the spectrum is also used in the infrared detection systems of air units, these infrared components are dominant in the reflections of the fuselage illuminated by the Sun, being used in turn detectors in this part of the infrared spectrum for the implementation of ground-to-air launcher anti-aircraft systems.

As already mentioned, all objects with a temperature above absolute zero emit thermal energy in the form of radiation, mainly emitted in the form of medium wave infrared (MWIR) and long wave infrared (LWIR), so these bands are often referred to as "thermal infrared". This emission of infrared radiation can be captured by specific sensors and the temperature of objects can be determined remotely; this is called thermography. Thermographic cameras detect MWIR and LWIR infrared wavelengths (3 to 12 $\mu$m) and differ significantly from night vision, which as mentioned above operates in the visible light and near infrared ranges (0.4 to 1.0 $\mu$m). They basically detect infrared radiation emitted by an object and produce images of that radiation. Since all objects emit infrared radiation which increases with temperature, thermography makes it possible to see temperature variations with or without visible illumination, as was necessary in night vision devices.

LWIR (longwave infrared) and MWIR (midwave infrared) cameras are used in a variety of military applications. In the defense sector, due to the creation of Stealth countermeasures for unit detection difficulty through RADAR, detection capabilities have been increasingly enhanced by the various militaries with Infrared *Search and Tracking Systems* (IRST, *INFRARED SEARCH AND TRACK SYSTEMS*), which are a method to detect and track objects that emit infrared radiation, such as infrared signatures from jet aircraft, helicopters, UAVs, etc. The technologies involved in IRST systems are similar to those used in thermal imaging systems, or FORWARD-LOOKING INFRARED (FLIR) systems, which use thermographic cameras (also called infrared cameras or thermal cameras). These are devices that create an image using infrared (IR) radiation (similar to a normal camera that forms an image using visible light), however, instead of the 400 to 700 nanometer (nm) range of the visible light camera, infrared cameras are sensitive to wavelengths from approximately 1000 nm (1 $\mu$m) to approximately 14 000 nm (14 $\mu$m).

The fact that IRST systems are becoming increasingly important in air defense applications is due to several factors. On the one hand, they are passive systems, i.e., unlike radar, they do not emit any radiation for their operation, therefore, surveillance through IR detectors is a silent surveillance (it does not give away its position) and therefore they do not suffer interference nor are they vulnerable to anti-radiation missiles. Another reason IRST systems are used is due to the constantly increasing performance of IR sensors, which provides an increase in long-range detection capability. On the other hand, the use of IR-based detection systems as a complement to radar systems is precisely due to the development of Stealth technology mentioned above. Stealth capability, in trying to be undetectable to radar signals, is being complemented by detection systems based on another band of the electromagnetic spectrum, infrared radiation (IR). In the operation of stealth units, the strength of RAM materials against microwave detection (RADAR) can become a weakness if detection systems are developed in the IR band, since, as mentioned above, the purpose of the RAM material is to absorb part of the RADAR wave and dissipate it by transforming it into heat, thus increasing the aircraft's infrared signature.

In the defense sector, detection systems employing infrared radiation have mainly three distinct advantages over other imaging technologies: (a) the imager itself is almost impossible for the enemy to detect, as it is a passive system, detecting the energy emitted by the target rather than sending energy reflected from the target, as with radar or sonar; (b) radiation in the infrared spectrum is difficult to camouflage; and (c) these systems can see through smoke, fog, and other atmospheric diffusing elements better than a visible light camera.

Due to their significant growth as detection systems, numerous efforts have been made in the development of countermeasures to reduce the infrared signature or thermal footprint of the different units, developing different materials and systems to mask this footprint. One of the most recent is that developed by the British company BAE SYSTEMS, which seeks to provide the unit with a system of thermal sensors and ceramic plates that can increase or decrease their temperature in an attempt to camouflage with the environment dynamically and thermally. In its patent EP3187815B1 it basically describes how, sensors on one side of the vehicle will obtain thermal readings from that side of the vehicle and the system will set that temperature pattern on the ceramic plates on the opposite side, becoming "invisible" to infrared detection systems or confusing it.

*Technical problem* to *solve*

As indicated, in the three atmospheric windows where electromagnetic signals can propagate without considerable attenuation, detection devices have been developed to aid in early warning for defense. The use of radar in the radio window, thermographic cameras in the infrared window, and optical cameras in the optical window together cover early remote sensing of targets remarkably well. However, the development of countermeasures in each of the windows has not been uniformly covered. Due to the greater difficulty in manipulating shorter wavelength waves, in all fields throughout history as different technological advances have been developed, electromagnetic waves have been controlled from longer to shorter wavelength waves. In the field of defense, the development has been similar, evolving temporarily by the mastery and development of devices that used longer waves, such as radio and television, towards shorter waves, such as radar (which uses microwaves), infrared vision or lately laser weapons.

As we have seen, mainly in the last century, numerous advances have been made in the field of radar countermeasures for the microwave band of the electromagnetic spectrum (wavelengths between 1 m and 1 mm), such as Stealth technology and design, metamaterial coatings, RAM materials, or more recently countermeasure systems for the infrared radiation band (wavelengths between 1 mm and 10-6 $\mu$m), such as coatings of infrared reflecting materials or temperature-varying ceramic coatings. These advances cover the atmospheric radio, microwave, and infrared windows.

However, in the optical atmospheric window, no considerable progress has been made in countermeasure devices against conventional optical systems or against the human eye. This is mainly due to the complexity of being able to manipulate electromagnetic waves as small as light, whose wavelengths are between 700 nm and 400 nm. This is why the concept of undetectability for the visible spectrum, invisibility, has not been achieved to date.

In order to carry out other measures that help to delay the location and identification of persons or objects in the visible spectrum range, concealment and camouflage techniques have been perfected. Living beings, and more specifically human beings, base our perception mainly on the sense of vision. Each of us, through our eyes, can visualize the environment around us, in other words, every human being has an optical receiver installed that operates in the visible band of the electromagnetic spectrum, so that, in the absence of technological devices, every human being will have an optical remote sensing device as standard. Vision, and therefore the visible spectrum, is the electromagnetic detection band par excellence. This simple fact has caused armies around the world throughout history to invest a lot of time and money in studies to help them understand how the human eye works and how it can be fooled.

Achieving invisibility as "the quality of not being able to be seen" within the range of the visible spectrum is not possible today. Following the concept of invisibility introduced, it would mean being able to manipulate electromagnetic waves of a size between 400 and 700 nm wavelength to surround an object and reconstruct the optical wavefront behind it, making it invisible even though it is physically there (optical cloaking). There is a lot of research on this, but none today presents itself as an effective solution for macroscopic objects. Because of human nature, the visible spectrum is the detection range par excellence. This factor, together with the fact that there are no effective countermeasures in the visible spectrum range, so the optical window is not properly covered with respect to telelocation countermeasures, could make systems operating in the infrared or radio windows ineffective, since any optical detector, including the human eye, could cause the localization and identification of persons or objects.

*Crypsis or camouflage*

Unlike "invisibility", which seeks to modify the reference wave so as not to be seen, camouflage is based on being seen, but being seen as the environment and thus making it difficult to differentiate from it. That is why both mechanisms differ in the objective, the way to achieve it, technology, and applications. For camouflage to be successful, an individual has to go unnoticed, unrecognized or unlocalized, and therefore it is the processing of visual information that needs to be fooled. The simplest visual camouflage is achieved by homochromacy (same color) with the surrounding environment. In nature, some animals develop this ability as a means of defense against predators. Animals such as owls or *Oedipoda caerulescens* develop static homochromacy (adapted to a constant environment) to camouflage themselves with the surrounding environment.

In the military field, the traditional solution for optical camouflage has been to provide the unit with a uniform color in accordance with the environment where it was to operate. As an example, aircraft with Stealth technology, in order to be conveniently camouflaged and undetectable in both atmospheric windows (optical and radio) are painted black (or dark colors) and often conduct their operations at night with all their navigation lights off. Thus, they are painted with the color of the environment (night) and thus achieve an effective camouflage for the optical spectrum band. The fact that they have to operate in the absence of light (night) in order not to be detected by the optical detection systems is a handicap for the availability of strategic resources. In order to enable military units to operate during the day, there have been countless advances in camouflage, implementing different textures or different combinations of diverse colors scattered throughout the uniform or vehicle to confuse it with the environment.

Camouflage is predominantly considered as a defense mechanism. One of the best studied forms of camouflage is background matching. All camouflage designs from the early days to date have sought a single objective, to delay the time it takes to locate and identify troops. Its success as a mechanism to avoid detection by third parties depends on the interaction between the coloration of the unit, its characteristic shape, the environment and the observer's visual system. To this end, the different camouflage patterns have been perfected based on two basic characteristics; the design of the disruptive patterns and the chromatic combination.

The designs and patterns of military camouflage uniforms have evolved over time, in their shapes and coloration each designed to match the landscape of the field of operations (e.g., snow, jungle, forest, desert). At first, camouflage uniforms had a homogeneous, monochromatic pattern, i.e., plain, single-color uniforms matched to fit the background color of the battlefield landscape. Since the foliage of the field of operations represents a very heterogeneous background that is difficult to match, the designs evolved to patterns with disruptive coloration, which is less dependent on the background. A disruptive pattern is achieved by a series of high-contrast narrow spot patterns, which involve reducing color contrast and breaking easily recognizable shapes, including fully or partially visible humans, since remote sensing mechanisms base part of their effectiveness in finding and identifying targets on the identification of characteristic shapes or contours. Likewise, high-contrast disruptive patterns seek to minimize the effects of counter-shadowing. In any battle environment, the body surface closest to the ambient light source will appear more illuminated than the one farther away. With a uniform color pattern, the unit might be identified by the absence of shadowing, while the surrounding foliage does cast shadows. To avoid this weakness, disruptive patterns have varying shades of colors that minimize uniformity and allow for brighter and darker areas typical of a heterogeneous environment.

US9062938B1 details uniforms with specific camouflage patterns, focusing on the designs of the disruptive coloration structures, as well as the different chromatic combinations in each case, depending on the model, country, there being an infinite number of them. In turn, based on the conventional camouflage, solutions have been developed to try to unify the optical camouflage with the reduction of the infrared footprint as the patent US5077101A registered by the secretariat of the U.S. Army, where they propose a three-color camouflage system distributed in several layers of camouflage chromaticity material (black, green and brown) that have low, intermediate and high thermal emissivities in the infrared spectral range, appearing black, green and brown in the visible spectral range. Three layers of different colors and reflectivities in both the infrared and visible spectral ranges are deposited on it and, by means of perforations in one, two or all three layers, produce a camouflage pattern structured in such a way that there is an adaptation of the color to the natural background in the visible spectral range, as well as an adaptation to the natural background in the thermal emissivity in the infrared spectral range so that the targets cannot be recognized with infrared sensing devices.

The scale of camouflage patterns is related to their function. Large structures (such as armored vehicles, aircraft, ships, etc.) need larger patterns than individual soldiers to alter their shape. These large patterns are more effective from a distance, while small-scale patterns work better up close. Traditional disruptive patterns, featuring single size spots, therefore work well at their optimal range of the observer, but an observer at other distances will not see the pattern optimally, so they may be out of range and lose their effectiveness. In order to be able to extend the range of effectiveness of disruptive patterns, multi-scale camouflage was designed. It is a type of military camouflage that combines patterns in two or more scales (sizes). The function is to provide camouflage over a wide range of distances, or equivalently over a range of scales (scale-invariant camouflage), similar to a fractal, hence the often referred to as fractal camouflage.

In recent years the classic disruptive pattern of colors is gradually disappearing from battlefields, for a more effective option, pixelated camouflage. Based on the concept of scale invariance of multiscale uniforms, in the late 1990s, the Canadian Armed Forces adopted a digital pattern that replaced the blotches typical of previous disruptive patterns, being the first army to issue pixelated digital multiscale camouflage for all units, introducing its CADPAT (CANADIAN DISRUPTIVE PATTERN) model. It is a type of camouflage pattern that combines micro (small) and macro (large) patterns with a pixelated appearance. As we have discussed, in traditional disruptive camouflage, large patterns work well at long distances and small patterns are better at short distances, however, patterns made from small squares or pixels can mimic both. The goal is to provide military camouflage over a wide range of distances. The idea behind this pattern is to increase the time it takes to identify the camouflaged object in its environment compared to solid color or "spotted" camouflage patterns.

Pixelated disruptive camouflage works by using many small shapes (pixels) of environmentally tuned colors to disrupt an observer's perception, making the shape of the object more difficult to distinguish against a similarly colored background. The use of small pixels provides a greater "blurring" effect (a kind of blending) between colors, which prevents the human eye from identifying solid lines between shapes. This makes it much easier to confuse and miss the pattern when placed against something like a tree line that includes small twigs, leaves and shadows. While up close they simulate natural shapes, such as tree leaves, from a distance they create a macro texture that blends in with the leaves, trees and shadows.

In 2001 the United States Marine Corps designed its own disruptive multi-scale camouflage pattern creating the MARPAT (MARINE PATTERN) model. Its design and concept are based on the Canadian CADPAT pattern. MARPAT was also chosen because it clearly identifies its wearers as Marines to adversaries, while helping its wearers remain concealed. Patent US 2009/0313740A1 lists U.S. Army research on fractal pattern camouflage as the basis for MARPAT showing how a target camouflaged with MARPAT takes about 2.5 times longer to detect than the old NATO camouflage that worked on a single scale, while recognition, which begins after detection, was delayed by 20 percent. What made the digital pattern work was the way the human brain processes information. The small colored pixels (OPTELS) in the fabric cause the human brain to see vegetation and terrain, not people. Another advantage of the digital patterns is that they can also fool troops wearing night vision scopes. The new patterns were tested in different environments, day and night, with night vision and various optics. MARPAT did exceptionally well in its wet uniform test when viewed with night vision while illuminated with IR, where normally the patterns appear as a solid.

"Digitizing" a pattern does not by itself improve performance; the design process is actually more complex and involves color and contrast, as well as an overall disruptive effect of the specific pattern geometry. If all elements of pattern design are not taken into account, the results are often poor. As with any camouflage pattern it only works when the color scheme of the pattern is designed correctly for the environment, so the effectiveness of background matching and disruptive coloration depends on the environment. Generally speaking, we could divide camouflages according to the environment in which they operate into five base regions; the tundra, desert, temperate climate environments, forested areas or jungles. In the early 2000s, a new phase of camouflage development began, not only in terms of pixelated designs, but also in the camouflage approach itself. To date, camouflage systems (whether for motorized units or soldiers) presented a chromaticity adapted to the environment where the operation was to be carried out. Such an environment has unique chromatic properties, often not compatible with other environments. If the troops were required to be mobilized to perform another mission in a different environment, it would entail a costly readaptation and refitting effort. The new phase of camouflage development was to design a camouflage pattern for use in a wide range of environments and conditions, the *MultiCam* pattern. This pattern has a background of a brown to light tan gradient, overprinted with a gradient of dark green, olive green and lime plus a top layer of deep brown and cream opaque shapes spread throughout the pattern. This allows the overall appearance to change from predominantly green to predominantly brown in different areas of the fabric, while having smaller shapes to break up the larger background areas. This effect produces a more general adaptation to various possible operating environments (excluding the arctic environment because of its special coloration).

As a further evolution of MultiCam, in 2004, the Army adopted a three-color universal digital camouflage pattern (UCP, UNIVERSAL CAMOUFLAGE PATTERN) in shades of gray. It was designed to allow a soldier to perform his duties in any environment without the need for specialized camouflage uniforms, be it desert, urban or forest/jungle environments. However, this camouflage pattern presents better adaptability to various operational scenarios in general but does not surpass in its own effectiveness the patterns designed expressly for each of the different environments, so, despite being an improvement in the search for the universality of camouflage, it is still not optimized.

Most of the camouflage methods seen aim at crypsis, often through a general resemblance to the background by means of devices or materials that show homochromy with the surrounding environment or through a high-contrast disruptive coloration that masks and minimizes the effect of shadows. The disadvantage of current camouflage methods is that they are static homochromy systems, according to the chromaticity of the environment in which they will operate. The problem lies in the fact that the vast majority of scenarios in the field of military operations take place in nature, which is a purely dynamic environment, in constant transformation. There are multiple factors that can vary causing changes in the chromic factor of the landscape, lighting or movement. Depending on the weather, the colors of the vegetation are not the same on a sunny, rainy, cloudy, windy or foggy day. Depending on the place where the action takes place, whether we are in desert areas, wooded areas, jungles, etc., the type of flora, rocks or terrain may vary in chromaticity, differing greatly in their base tones. At the same time, depending on the time of the year when the operation is conducted, the flora can acquire characteristic tones different from other times, even throughout a day, depending on the time of the day, the appearance of the vegetation can vary considerably. All these factors cause the static camouflage systems to lose their effectiveness at some point, which can clearly endanger the deployed units.

In order not to use static optical camouflage solutions for dynamic environments, the latest research in the field of optical camouflage tries to develop dynamic optical camouflage systems that manage to install a camouflage system that adapts to the changing conditions of the operating environment. In these dynamic systems, two different lines of action can be distinguished. On the one hand, systems that take images of the environment and project them by means of display systems on the chassis of the motorized units. Basically, these approaches are based on the capture of images on one side of the vehicle by optical sensors and the projection of these images on the display systems placed on the other side of the vehicle, showing on the surface of the vehicle what the observer would see if it were not there, camouflaging it with the environment. In this line we find solutions such as patent US20100288116A1 that seeks to provide multispectral adaptive detection, concealment and camouflage countermeasures incorporated in a single system. To this end, the system is composed of various layers that provide visual, thermal suppression, radar and signal camouflage. The layers may include thin insulating layers, a frequency selective surface array to block or allow particular frequencies, a thin radar scattering layer and outer layers that mimic and adapt to the environment visually and thermally, as well as a layer of a plurality of flexible image displays on the sheet-structured device, such as organic light emitting diode (OLED) displays to provide visual camouflage, concealment, and deception. Also, along these lines is patent GB2362283A, which seeks to achieve camouflage by capturing the hidden image behind the object relative to an observer's position and displaying the hidden image on the surface of the object using LCD displays. By capturing multiple images from all directions around the object and covering the surface of the object with the images captured from the opposite side, the ability of observers in either direction to distinguish the object is reduced. These kinds of systems, we believe, have their drawbacks. Because they require imaging devices, they are active systems, so they need electricity and therefore batteries to operate, which can increase the IR signature. By requiring image processors, these systems need to have electrical circuits to operate, so they are sensitive to electromagnetic radiation and therefore vulnerable to weapons using electromagnetic pulses. The operation of these systems must have a very precise control of the brightness level of the screens, since the detector on one side of the vehicle can capture a lighted environment (under the sun) and the screen be located in a shaded area, which would make an erroneous reading of the luminous intensity to be displayed on the screen and the unit would appear brighter than the environment, losing its effectiveness. Finally, having a large number of sensors and display, the system must be robust, as a malfunction of any display or sensor could mean that the overall system would lose its effectiveness.

On the other hand, advances in dynamic camouflage systems have followed the line of development based on the mode of operation that cephalopods have, through variable chromaticity systems, trying to implement devices that alter the color of the surfaces of tactical units. Patent WO2016078987A1 uses electronic coloring systems with liquid crystal, similar to the one used by the same company in infrared camouflage (discussed above). This time an adaptive camouflage system is provided that can be operated to switch between a range of colors, shades or vary or modify a brightness level to better match the environment, by manually switching between a series of preset colors and patterns to choose a configuration that matches the environment. Such changes are achieved by means of liquid crystal plates, which change hue depending on the voltage applied to them. Another solution on the same basis is set out in patent US20120120148797A1 which details a camouflage structure capable of altering its appearance between the greenish camouflage typical of a wooded environment and the brownish camouflage of the desert. For the color change, cholesteric liquid crystals are used in this case as thermochromatic elements, which are capable of changing color in response to a heating device. Here the color change can be produced by various conduction methods, electrical activation, optical activation methods, thermal activation methods and magnetic activation methods. The camouflage structure originally presents a first color state and presents a second color state after the color changing layer changes color by a conduction method.

The two previous solutions are active solutions, i.e., they need electricity to operate. In order to reduce this consumption, different solutions have been developed that are "semi-active", i.e., they need electricity for their operation, but only for the color change process. The adaptive camouflage structures proposed in patent WO2007084148A2 present an adaptive camouflage structure that can be dynamically adjusted to disguise the appearance of an object, such as military personnel, vehicles, equipment and structures, so that the object looks like its immediate surroundings to detectors using visible light, ultraviolet light, infrared radiation, microwaves and/or radio frequency. The camouflage patterns are generated by reflective layers, each comprising a plurality of electroactive particles which can be selectively oriented to provide a desired image. The images provided by different layers may be suitable for different regions of the electromagnetic spectrum, such as visible light, infrared radiation, ultraviolet light, microwave and/or radio frequency, as each layer operates in a different wavelength range. In this case, the camouflage structures are stable and can be maintained without energy, achieving energy savings for their operation with respect to previous solutions. In a similar vein, the U.S. Department of the Navy filed patent US9175930B1 in which camouflage is achieved using electronic paper panels conformed to the exterior surface of a vehicle; one or more cameras to sample images of the local environment surrounding the platform; and a processor to analyze the sampled images, generating synthesized camouflage patterns corresponding to the sampled images. This biologically inspired camouflage capability can be achieved by equipping the vehicle with color electronic paper, which is a thin, flexible display that consumes no power when displaying an image and consumes very little power when changing the image. Despite being two more energy-saving solutions than those mentioned above, they still present the same drawbacks of an active optical display and monitoring system.

The exposed solutions try to solve the problem of the static nature of traditional camouflage systems. Patent US20120120132063A1, following this same line of development, also tries to implement a multi-scale camouflage. This is a multi-range camouflage comprising a series of visual elements or images that together define a first micro-appearance or micro pattern when viewed up close, and a second macro-appearance or macro pattern when viewed from a long distance. The macro camouflage pattern is obtained from a preferential arrangement of the visual elements or images within a matrix. Some or all of the visual elements in the matrix may vary from each other in color, brightness, size or pattern. Each visual element effectively becomes a pixel that can vary its coloring according to the source image to be displayed.

Other solutions have opted, not to try to achieve variable chromaticity, but to try to minimize the effects of illumination on the unit, which could unmask the classic camouflage patterns it would have been painted. For decades, painting camouflage patterns on militaryvehicles has been used to reduce their visibility on the battlefield. One problem for these vehicles is that sunlight hitting one side of the vehicle tends to illuminate one side and leave the opposite side in shadow. The contrast between the illuminated side and the shaded side tends to make the vehicles stand out from the background against which they are seen. The U.S. Department of the Army registered a photorefractive camouflage in patent US5144877A, which consists of a camouflage system for the exterior of a military vehicle consisting of photorefractive lenses on the vehicle, which have irregular topography and a thin anti-reflective film on their faces. The system reduces or eliminates the contrast between the illuminated and shaded panels of the vehicle to better blend with the background against which the vehicle is viewed. The lenses are photoreactive materials arranged on the exterior of a military vehicle that darken as the intensity of light striking them increases. As a result, the lenses will cover the default painted camouflage pattern and reduce the contrast between the illuminated and shaded surfaces of the vehicle. This solution is not adaptive to the chromaticity of the environment but is adaptive to the brightness of the environment.

All these adaptive camouflage systems are basically active, so they need power supply units, image processing systems, as well as a complex network of circuitry and sensors, so besides being complex solutions, expensive, difficult to maintain and vulnerable to any electrical failure, they could be presented as solutions for structures or motorized units, not being viable for infantry uniforms. Therefore, the elementary technology solution of colored squares, developed in the 1970s, continues to be the simplest and most effective form of camouflage, even though it is a static solution.

Finally, US2015/0268003A1 describes an advantageous camouflage apparatus, e.g., a sheet of plastic material or the like having three-dimensional shapes, to a product such as a vehicle, e.g., the interior and/or exterior of a vehicle. For example, a camouflage apparatus can be created using reflective and/or holographic plastic sheets subjected to a vacuum forming process to form three-dimensional shapes in the plastic sheets. Alternatively, the sheets could be formed by some other process, such as a combination of heat and pressure. The camouflage sheeting including the sheets may further include an adhesion mechanism for attaching to a product such as a test vehicle, for example, the adhesion mechanism being an adhesive backing or the like. The three-dimensional shapes formed in the plastic sheets may be combined with various colors, materials (e.g., creating or enhancing reflectivity with a film with interwoven foil, combining different pigments, etc.) and/or patterns to enhance a camouflage effect. In general, various combinations of materials, pigments, etc. can be used. Accordingly, when affixed to a product such as a test vehicle, the camouflage sheet may produce a specular reflection or the like that makes it difficult or impossible to accurately capture an image, e.g., a photograph, of the product. Further, the camouflage sheet may be affixed and/or combined with other camouflage mechanisms on a product. For example, with respect to a test vehicle, a working location of grill, door opening mechanisms, events, window and/or pillar lines, exterior lights, etc., could be disguised with simulated or "fake" parts or components which, even more alternatively or additionally, could be covered and/or located next to the camouflage sheet. This system does not represent a camouflage as a traditional concept, but is oriented to disguise the geometries of the experimental models under development or prototypes by using films or reflectors of metallic or plastic base that generate metallic shines and colorations that disguise the forms and characteristics of a certain prototype, similar to those commonly used in sunshades and commonly called holographic due to their similarity in coloration with the rainbow holograms used in the authentication devices characteristic of credit cards, banknotes or labels.

*Directed energy laser weapons*

*A DIRECTED-ENERGY WEAPON* (DEW) is a weapon that operates at a distance and directs a highly concentrated type of energy towards a target, inflicting critical damage by transmitting this energy. This energy is usually an electromagnetic wave, so these weapons are not based on the launching of a material projectile, but of pulses of high-energy electromagnetic waves, which has certain advantages over the use of conventional firearms. One of the great advantages of DEWs, being electromagnetic wave weapons, is that they can be used stealthily with no sound impact during their use. They are suitable for space warfare and have the ability to solve the natural logistical problems of conventional weapons associated with the availability and delivery of ammunition, since, in DEWs, as long as power is available, the weapon can operate uninterruptedly.

On the other hand, being an electromagnetic wave, it is not affected by factors such as gravity, wind and the Coriolis rotation force, so they are more accurate weapons, with the minimization of collateral damage that this implies, always taking into consideration the inherent limitations of diffraction and absorption in the atmosphere, hence their waves must fit with the atmospheric windows already discussed.

Depending on the type of electromagnetic wave used, within the variety of these weapons we can differentiate three groups: those that use microwave fronts, those that use laser beams and those that use particle beams. Weapons that use sound wave beams could be included in the DEW cataloging, but due to the nature of these weapons, which are not electromagnetic waves, they are not included in our analysis.

DEWs using microwaves called *HIGH POWER MICROWAVE* (HPM) Weapons generate non-kinetic discharges of energy at high power with which to knock out the electronic equipment of several objects at once. As we have seen, in an electromagnetic wave, the shorter the wavelength, the more energy a wave carries. Therefore, microwaves, being a less energetic wave, must have a very high energy to inflict damage by collapsing the fuselage, therefore, this type of weapon is absorbed by the target through the data acquisition or emission devices (antennas) causing the collapse of the electronic equipment connected to them.

*PARTICLE BEAM WEAPONS* use atomic and subatomic particles as projectiles. These weapons are, today, theoretical weapons, since they have never been demonstrated in practice due to their high weights and costs.

A special type of DEW weapons is electro lasers or *LASER INDUCED PLASMA CHANNEL (LIPC) WEAPON,* which are a hybrid weapon, using a laser to ionize a path of molecules to the target and then, through that path, send a high electrical charge to cause damage.

Laser weapons or *HIGH ENERGY LASER (HEL) WEAPONS,* being composed of laser beams in the infrared and visible bands, whose wavelengths are smaller, are more energetic weapons than HPW. This type of weapon produces blindness in the enemy or a collapse due to thermal effects, as a result of the transfer of the high energy transported to the target. This type of weapon was initially designed to destroy short and medium range ballistic missiles during the boost phase of flight from satellites, but the difficulties presented by the atmosphere, such as optical scattering and refraction, which limited their range, have made laser weapons a perfect means for use in self-protection systems against low intensity attacks. Laser weapons, due to their cost in employment, are postulated as the most suitable weapons as defense systems against unmanned UAVs, since the cost of the latter is lower than that of a possible missile launched to shoot it down. Due to the large increase in the use of unmanned systems for aerial surveillance and low intensity attacks, governments around the world are putting a lot of effort into the development of this type of weaponry.

Likewise, as are logical, effective countermeasures against these types of weapons are being developed. Patent US20210227677A1 assigned to Boeing CO presents a defense mechanism against directed energy systems based on laser-induced atmospheric optical breakdown in which a system of ultrashort laser pulses ionizes the air in a region between the structure and the directed energy source, generating a plasma shield which, being opaque to electromagnetic radiation, the laser signal emitted by the directed energy source is absorbed by the plasma shield instead of hitting the structure, protecting the structure against directed energy sources.

The following documents disclose several systems according to the preamble of the claim 1 of the present invention:

ZENG GENG et al. "Design of low-cost photonic crystal based three-dimensional invisibility cloak", MICRO- AND NANOTECHNOLOGY SENSORS, SYSTEMS, AND APPLICATIONS III, SPIE, 1000 20TH ST. BELLINGHAM WA 98225-6705 USA, vol. 8031, no. 1, 13 May 2011 (2011-05-13), pages 1-6, DOI: 10.1117/12.886430.

YUANKUN LIN ET AL: "Five beam holographic lithography for simultaneous fabrication of three-dimensional photonic crystal templates and line defects using phase tunable diffractive optical element", OPTICS EXPRESS OPTICAL SOCIETY OF AMERICA USA, vol. 17, no. 19, 14 September 2009 (2009-09-14), pages 16625-16631, ISSN: 1094-4087, DOI: 10.1364/OE.17.016625

XIN XIE ET AL: "Plasmonic Metasurfaces for Simultaneous Thermal Infrared Invisibility and Holographic Illusion", ADVANCED FUNCTIONAL MATERIALS, WILEY-VC H VERLAG GMBH & CO. KGAA, DE, vol. 28, no. 14, 31 January 2018 (2018-01-31), page n/a, ISSN: 1616-301X, DOI: 10.1002/ADFM.201706673

US 2015/268003 A1 (BAZINSKI STEVE NORMAN [CA] ET AL) 24 September 2015 (2015-09-24) US 5 985 381 A (CONNER KYLE HENRY [US]) 16 November 1999 (published 1999-11-16)

SERPUKHOV HIGHER MILITRAY COMMAND AND ENGINEERING SCHOOL: "MASKING DEVICE", ; & RU 27 949 U1 (SERPUKHOV HIGHER MILITRAY COMMAND AND ENGINEERING SCHOOL) 27 February 2003 (2003-02-27)

However, none of the documents located in the prior art describe a holographic camouflage device, system, or method such as the one described below.

**Explanation of the invention**

*Holographic camouflage system*

The present invention relates to a device, a holographic system and a method of camouflage and concealment. The object of the invention is the utilization of holographic technology for the purpose of obtaining dynamic camouflage or concealment systems for objects or persons. It is, therefore, an object of the present invention to develop an optical cloaking system that provides a passive and dynamic optical camouflage, through the use of reflection holographic optical elements (*RHOE, REFLECTION HOLOGRAPHIC OPTICAL ELEMENTS*). This object is achieved by the device, system and method of the claims accompanying this specification.

Holography is a method of optical storage of information by recording the interference pattern of two coherent light waves in a photorefractive material. In the recording material, periodic nanostructures are generated that are similar in size to the size of the electromagnetic (light) waves being worked with. These nanostructures contain and store specific information about the light beams used, which is called a hologram. To retrieve the stored information, the hologram is illuminated with an electromagnetic wave, which may require certain properties depending on the type of hologram generated. When the electromagnetic wave passes through the hologram, as it presents periodic structures with dimensions similar to the size of the wavelength of the reconstruction (reading) wave, it undergoes a diffraction process and, therefore, the original properties of the incident wave are affected and are modified following the stored information. It is for this reason that holography is also called diffractive optics.

When we talk about light management, we are talking about optical technology. Holography is an optical technology, but it is governed by different physical laws than conventional optics. While conventional optics basically bases its operation on the physical properties of reflection and refraction, holography bases its operation on the physical property of diffraction. Due to this difference in the principle of operation of holography with respect to conventional optics, holography has certain properties different from conventional optics, giving holography "certain advantages" or differential operation with respect to conventional optics, which provides greater control over light.

The two main properties would be, on the one hand, chromatic dispersion, which allows the separation, by transmission, of the different wavelengths of light (visible spectrum), and spectral selectivity, which allows the blocking or reflection of certain wavelengths of the incident wave, not acting on the rest.

Based on these two simple properties, composite, hybrid or multiplexed holographic optical elements can be made with specific spectral properties that allow several types of frequencies or wavelengths to be handled independently. A holographic optical element (*HOE, HOLOGRAPHIC OPTICAL ELEMENT*) is an optical element, similar to mirrors, lenses or prisms made in conventional optics, which uses the diffraction property in its operation. HOEs have been widely used in the fields of imaging, solar concentrators, and optical scanning systems, to name a few examples that are currently applied. Thanks to their properties of spectral filtering of light and being able to direct light in certain geometrical situations, their use has become widespread in various technological applications. The internal structure of an HOE is formed by Bragg planes, whose separation is of the order of a few hundred nanometers, so it can interact with the optical radiation incident on the HOE by diffraction. Such devices, by using diffraction, can be much thinner (from 6-9 microns thick to hundreds of microns) and lighter than those developed by conventional optics. Likewise, these holographic devices could be developed to obtain geometric control of the direction of light propagation, control and manage different wavelengths separately, be flat devices (easy installation) or be multifunctional devices, being able to present different modes of action in a single element.

Because of these properties, holography can go beyond the limitations of conventional optics, opening up new possibilities in the design of optical devices. With the proper design and combination of HOE, complex multifunction devices can be implemented to control light for any desired purpose. If to these faculties, we add the fact that holography, at present, places its field of application mainly in the photonic part of the electromagnetic spectrum, more specifically in the visible spectrum (ultraviolet, visible and near infrared), coinciding precisely with the area of the spectrum where most solar radiation reaches the earth's surface, this is why holography is postulated as the most suitable technology to develop the optical devices necessary for optimal control of the optical spectrum of solar radiation.

These properties make holographic optical elements (HOE) the perfect tools for the design of optimized camouflage. In this invention a device seeking invisibility is not to be realized. Therefore, it is not sought to actively modify the properties of the process reference wave, but to opt for *camouflage,* i.e., to adopt a similar appearance or homochromy with respect to one's own environment. As the operating band is the atmospheric window located in the optical part -visible spectrum- of the electromagnetic spectrum, the present invention will use as reference wave the light coming from the Sun.

This reference beam will be incident on the holographic system and will be diffracted and incident on the environment. Any reference wave that arrives diffracted to an optical remote sensing device, whether it is the human eye or any camera or optical sensor, will contain the chromatic information, texture, shading or movement of the environment, masking the unit. In short, the basis of operation of this holographic camouflage is a masking or concealment coating of the unit in question that diffracts the operating environment and manages to optimally delay the location and identification of objects or people.

The system consists of a mesh of reflection holographic optical elements (RHOE), each with a hexagonal shape, which diffract a part of the visible spectrum independently to special directions that conventional optics, following Snell's law of reflection, could not provide. The advantage of using holography is the ability to control the different parts of the light spectrum independently, its reduced size and weight, as well as being able to work with reflection directions that conventional optics would not allow.

Traditional camouflage systems, whether active or passive, base their mode of operation on the vision process using the physical laws of reflection and refraction of conventional optics. This provides the overall camouflage process with fixed directions of reflection, diffusion or transmission, strictly limiting the control variables only to the hue, brightness, chromaticity, distribution and pattern design of the camouflage material devices or coatings for its effectiveness.

Each RHOE in turn can have optical properties independent of the rest of the RHOES. In each holographic unit specific characteristics are configured, which may coincide, or partially or completely differ from the adjacent units. The overall performance of the mesh will provide a different camouflage with different optical results to be applied as appropriate in each case. The configurable properties in each holographic unit that provide different types of global camouflage are:

*a) Wavelength of the electromagnetic spectrum to be diffracted*

RHOEs may have a high chromatic range, i.e., diffracting at any wavelength of the visible spectrum. Each RHOE may be composed of multiple multiplexed RHOEs covering the considered bandwidth of the visible spectrum. As a basic unit, a RHOE will be composed of at least 3 multiplexed RHOEs in RED (R, Red), GREEN (G, Green) and BLUE (B, Blue) in order to diffract a white light image (RGB spectrum) that matches the correct chromaticity of the environment. This configuration possibility will allow to be able to adapt to whatever the chromaticity conditions of the operating environment may be.

*b) Diffraction efficiency of each RHOE*

As is well known, not all elements in nature have the same reflective capacity, i.e., not all will reflect the same percentage of light that strikes them. In the configuration of each holographic element, the diffraction efficiency can be controlled, allowing it to diffract a part of the spectrum from 0% of the radiation that reaches it, up to 90% reflectance. By means of the ad-hoc configuration of this feature, we will prevent our system from diffracting lighter than the surrounding environment, avoiding the disadvantages mentioned in active camouflage systems using screens.

*c) Diffraction direction control*

As previously discussed, due to the use of diffraction, RHOEs can be provided with diffraction directions that allow the coating to diffract the nearest surroundings from any perspective, achieving optimized dynamic camouflage. Being able to diffract the surroundings allows dynamic camouflage to be achieved that immediately adapts to changing environmental conditions.

*d) Macro and micro camouflage*

As with conventional optical camouflage, digital or pixelated camouflage can be achieved by meshing RHOES with the same optical characteristics in adjacent RHOES, providing random group synchrony, by grouped optical pixelation to form macro and micro patterns, which allow high effectiveness at both long and short distances.

*e) Optical magnification control*

RHOEs can be provided with a diffraction reflection with or without optical magnification factors. If the hologram has no magnification factors, it will diffract the environment as it is, respecting the creation of the image in orientation, magnitude and distance. On the other hand, if the RHOE is provided with magnification, the image formation would be distorted, similar to the concave or convex mirrors used in conventional optics. The objective of this modality is to obtain a pixelated mesh that in turn distorts the images, making it easier to break up regular shapes that could give away the operating unit.

*f) Global design as a fractal*

A fractal is a figure which possesses the property of self-similarity at any scale, that is, its shape is composed of smaller copies of the same figure. Its main characteristic is that its appearance and the way in which it is statistically distributed does not vary when the scale used in the observation is modified. No matter how much the scale of observation of a fractal figure is increased, it is observed that its shape is maintained and constantly repeated. Nature itself often has fractal structures. The use of a fractal camouflage design is to mimic the self-similarity of nature and to endow the design pattern with a scale invariance that gives the camouflage full effectiveness regardless of the distance from the observer.

Fractal-like patterns work because the human visual system efficiently discriminates images that have a different fractal dimension or other second-order statistics, i.e., by changing the scale of observation, the figures become distorted in scale and would stand out from the environment.

All these possibilities of action on each holographic unit provide an optimized camouflage system, with dynamic homochromy, adapted to rapid changes typical of heterogeneous environments, by diffraction of the surrounding environment in real time and therefore making identification difficult. In addition, holographic camouflage has several advantages over other camouflage systems.

It is a passive system (not powered by electric current). As it has no electronic circuits, it will always be in operation and at the same time, being an optical system, it is immune to electromagnetic radiation, therefore, it is not sensitive to electromagnetic pulse attacks that could disable any electrical device. Likewise, being a coating that does not require circuitry, electronic components, screens or sensors, it is a simple and robust system, which does not depend on the failure of any part of a complex system, which in turn means lower costs compared to active systems, along with the decrease in installation and maintenance costs of the units.

It can operate in the visible spectrum band of the electromagnetic spectrum, which coincides with the atmospheric window that is not covered by remote sensing countermeasure systems in the other windows. Therefore, it complements RADAR and infrared camouflage systems. Likewise, as it is a multilayer optical system working in the entire visible spectrum, it is compatible with holographic shielding systems against directed energy laser weapons.

By being able to cover up to the near infrared (IR), it helps to reduce the infrared signature.

The system is versatile and scalable, offering the possibility of use in any type of infrastructure, whether in fuel depots, buildings or camps or other buildings, air, land or sea units, unmanned systems or personnel.

When designing a camouflage, parameters such as brightness, shadows, silhouettes or movement must be taken into account. The adaptability of the brightness to the environment is achieved by means of an adapted diffraction, since the system will diffract the luminous intensity that reaches it from the environment, not being out of tune with it. As it is a diffractive optical system, it is not subject to the restrictions involved in the use of conventional optics, therefore, the coating is flat, minimizing the possibilities of shadow generation due to the coating itself in order to obtain the efficiency and diffractive reflection directions it provides. **If** the system were to work under conventional optics, to obtain the same performance, due to the restrictions of the law of reflection, it would have to be composed of a mesh of tetrahedral mirrors which, since they present relief, would cause unnecessary shadows that would be counterproductive to the efficiency of the system.

Due to its digital configuration, it has a macro and micro pixelation that, together with the possibility of creating fractal systems, will provide the camouflage with fractal properties that allow it to maintain maximum efficiency regardless of the distance from the locating device.

Finally, as it is a dynamic system, the operating unit will not need to be set up if the field of operations is moved to another location, minimizing the reaction and deployment times of any army. The adaptability is not based on image processing systems, as might be required by display systems, therefore, it is a system that provides adaptability and dynamism by adapting to the dynamic conditions of the environment in real time, whether stationary or in motion. This ability, by reflecting diffraction of the immediate environment, projects on the unit both the homochromy and the movement of the foliage, providing the system that carries it with a decisive optical undetectability.

This invention represents a further step in the optimization of traditional camouflage systems. With its implementation, it covers an atmospheric window not covered in terms of countermeasures with remote sensing systems, the optical window. This invention offers the advantages of the design and implementation of optical camouflage systems to operate in visible light, infrared camouflage systems to operate in low light conditions, systems adaptive to the chromatic and dynamic conditions of a heterogeneous system such as nature, adapting to the changing coloration and movement conditions of any natural environment.

At the same time, it is a passive system, requiring no energy for its proper functioning, it is lightweight, inexpensive, easy to implement, can be easily replaced in case of damage, is immune to electromagnetic radiation from radio frequency directed energy weapons, and is therefore robust. **It** is compatible with traditional shielding systems, as well as remote sensing countermeasures systems from other atmospheric windows such as thermal camouflage systems or Stealth systems. **It** can be designed ad-hoc for the required conditions, either under the conditions of the target environment or the unit to be implemented, naval units, air units, unmanned systems, structures, or buildings and even infantry. A digital or pixelated pattern can be implemented to superimpose different optical effects and cause a breakage of shapes, scale invariance with fractal properties to maintain its effectiveness regardless of the position of the observer to optimize the purpose of a good camouflage system, to delay the location and identification of operational units to almost make them look like structures of the environment, going unnoticed by the optical remote sensing systems.

*Holographic concealment system*

The invention consists of a holographic concealment system that hinders the vision, identification or capture of images of the unit or installation to be protected by means of the projection of a real image of a hologram. The invention does not try to camouflage, mimetize or try to make invisible a device, but it tries to hide by means of the concealment of a holographic image, which, by its nature, is exempt from danger of collision on the part of own or allied troops.

When a hologram of a diffusing object is made, an interferential pattern of the wavefront of that object is generated. In its reconstruction, two types of images are obtained: (a) a virtual image, which will appear in the same place where the object was during its holographic storage (and which we commonly identify as the image "*inside the hologram*"), and (b) a real image, which will focus on the same distance where the object was, but "*outside the hologram*".

The invention consists in using the properties of a real image of a hologram as a masking and concealment image, projecting it in a direction parallel to the ground and concealing the unit to be concealed from any photograph or video taken from a zenithal plane, used by the different aerial surveillance systems. This image can be enlarged and displaced the required distance by means of an optical system, providing the required angular coverage, as well as the required operating height according to the needs of the system to be concealed.

The holographic concealment system will be placed above the unit to be concealed, projecting a real image of a diffractive pattern established according to the needs. This projection may be placed at a certain height established according to the required needs and the design parameters of the holographic concealment system, such as the characteristics of the lighting systems, type of diffractive pattern designed, climatic conditions, etc. The holographic cloaking mechanism is not intended to camouflage the unit, but to hide it, so that the aerial surveillance systems, whether UAV, weather balloons, airplanes, satellites, or any other, if they take an image, would capture the holographic image of the diffusing object and not of the hidden unit (or both depending on the design of the diffusing pattern), making it difficult to identify the units under the holographic image.

*Holographic defense system against directed energy laser systems*

The invention seeks to provide a holographic covering that acts as an optical shield against directed energy weapons, more specifically against laser weapons in the visible and infrared spectrum.

The purpose of a directed energy weapon is to deliver a beam of high-energy electromagnetic radiation that, when striking an object's structure, produces thermal effects until it collapses. The basic rationale of these weapons lies in raising the energy power level per unit area. High-energy electromagnetic waves are used for this purpose. As we have mentioned in the introduction of the invention, according to the wavelength of an electromagnetic wave, we will classify it as radio waves, microwaves, infrared, visible spectrum, ultraviolet, X-rays, among others. At the same time, we have mentioned in the introduction the atmospheric windows, which allow the transmission of electromagnetic waves. To design a directed energy weapon, it will have to be designed to act in one of these atmospheric windows, so not every electromagnetic wave is viable for this purpose, therefore, as we have seen in the introduction of this section, directed energy weapons are located in the atmospheric windows of radio frequencies, infrared spectrum and the visible spectrum.

One of the important characteristics of electromagnetic waves is that they carry energy. The energy of an electromagnetic wave is related to its frequency (or its wavelength), so that:

$$E = h \cdot \nu = h\frac{v}{\lambda}$$

Where h is Planck's constant, ν is the frequency, v is the propagation velocity and λ is the wavelength, therefore, the shorter the wavelength, the greater the energy carried by a wave. When designing a directed energy weapon, the ideal would be to be able to irradiate the target until it collapses by minimizing the irradiation time on it, therefore, the higher the energy of a wave, the shorter the irradiation time required for it to collapse. From this perspective, the most suitable electromagnetic waves would be those corresponding to the visible spectrum, since they are the highest energy electromagnetic waves that we can propagate through the atmosphere. However, there is a handicap: the shorter the wavelength, the greater the attenuation, therefore, the shorter the wavelength, the greater the energy transported, but the shorter the range of the weapon.

Under these premises, there are (as we have seen in the introduction of this section) several directed energy weapons. This invention a priori falls outside the scope of directed energy weapons in the radio frequency spectrum, which as we have seen, their basis is to penetrate through the electromagnetic signal pickup systems (antennas) and try to collapse the electronic circuits of the target. This invention will focus on directed energy weapons of visible and infrared radiation, which attempt to collapse the target due to the thermal effects produced by the high energy carried by the electromagnetic wave.

If a priori, the purpose of the weapon is to concentrate the greatest amount of energy per unit area, the invention is focused on dispersing and reflecting said energy so that the energy of the electromagnetic wave that finally reaches the fuselage of the target does not have sufficient energy charge to cause the system to collapse.

Throughout the description and the claims, the word "comprises", and variants thereof are not intended to exclude other technical features, additives, components, or steps.

The following examples and drawings are provided by way of illustration and are not intended to restrict the present invention. The scope of the invention is defined in the appended claims.

## Brief description of the drawings

The following is a very brief description of a series of drawings which help to better understand the invention, which is illustrated as a non-limiting example thereof.

| | |
|---|---|
| Figura 1 | Example of a transmittance graph of an RHOE. |
| Figura 2 | Example of diffraction plots of an HOE at blue, red, green wavelength. |
| Figura 3 | Differences between reflection of a conventional optical element (a) and diffraction (b) in an HOE. |
| Figura 4 | Illustrative example of the layer format of a diffractive reflection block (DRB). |
| Figura 5 | Example of hexagonal tessellation of a HOXEL. |
| Figura 6 | Example of a semi-regular hexagonal triangular tessellation of a HOXEL. |
| Figura 7 | Example of circular semi-regular tessellation. |
| Figura 8 | Example of superposition of two hexagonal tessellations of the same size. |
| Figura 9 | Example of superposition of two hexagonal tessellations of varied sizes. |
| Figura 10 | Example of superposition of seven tessellations of the same size. |
| Figura 11 | Example of HOXEL grating in configuration with the same diffraction direction (a) and with different diffraction directions (b). |
| Figura 12 | Example of HOXEL meshing in configuration without optical magnification (a) and with optical magnification (b). |
| Figura 13 | Example of HOXEL meshing in chromatic configuration of independent HOXELs. |
| Figura 14 | Example of HOXEL grating in uniform and independent HOXEL diffraction efficiency configuration. |
| Figura 15 | Example of HOXEL meshing in macro and micro configuration. |
| Figura 16 | Schematic of the operating system of the concealment system of the invention. |
| Figura 17 | Illustrative example of the layer format of a holographic cloaking system. |
| Figura 18 | Example of the general multi-layer basic structure of a holographic defense system against directed energy systems. |

**Detailed explanation of a mode of realization of the invention.**

As previously indicated, the most common remote sensing systems are located in each of the three atmospheric windows. Remote sensing systems and their corresponding countermeasures have been developed in all three windows. Of all of them, countermeasures in the optical atmospheric window have had the least effective development, with traditional camouflage remaining the most effective countermeasure.

The main object of a camouflage system such as that of the present invention is to delay the location and identification of the camouflaged person or object. For effective camouflage, the following aspects must be considered:

    (a) Chromaticity: the system must be homochromatic with the surrounding environment in order to go unnoticed.

    (b) Shading: The system should have the same shading pattern as the surrounding environment. In addition, it should not cause artificial shadows due to its structure that could give away its presence.

    (c) Brightness: the system must have a reflectivity tuned to the reflectivity of the environment to be aligned with the surrounding brightness caused by sunlight. A brightness that is not in line with the environment could give away its presence.

    (d) Movement: most camouflages, if they have the correct chromaticity, shading and luminosity, are effective in static situations. As soon as the unit is in motion, its presence can be betrayed. A camouflage system must also be effective when in motion.

    (e) Dynamism: an optimized camouflage system must be able to continue to be effective in the face of constant changes and variations in the conditions of a dynamic environment, such as nature.

    (f) Scale invariance: the camouflage must be effective regardless of the distance from the observer.

*Holographic optical elements (HOE)*

The present invention is based on the implementation of a camouflage system including one or more holographic optical elements (HOE) as base structures. HOEs are optical elements that base their operation on the diffraction of light, as opposed to conventional optical systems, which base their operation on reflection and refraction. Hence, in the present descriptive memory reference is made to the diffracted beam for HOE, and not to the reflected or refracted beam, since they are completely different concepts and ways of operating.

HOE are nanostructures that are generated by storing in a recording material a constructive interference pattern of light beams generated by stimulated emission. This interference pattern generates Bragg structures that, depending on their configuration, provide certain optical characteristics or others.

HOE can be classified into transmission HOE (THOE) and reflection HOE (RHOE). In THOEs, light is incident on one side of the structure and diffracted by the opposite side, as happens in diffraction gratings and holographic lenses. The main characteristic of transmission HOE (THOE) is that they present chromatic aberration, being able to separate the spectral components in different directions of propagation. In RHOE, incidence and diffraction occur on the same side of the optical structure, as in holographic mirrors. The main characteristic of reflection HOEs (RHOE) is their spectral selectivity, reflecting by diffraction certain wavelengths and not acting on the rest.

HOEs, being diffractive elements, have different properties than conventional optical elements. They are thin structures, from 6 $\mu$m to more than 100 $\mu$m. Therefore, they are exceptionally light and allow control of the directionality of the light, being able to handle different wavelengths simultaneously and independently. In addition, they can be flat surfaces and complex hybrid HOES with different characteristics can be designed in the same optical element.

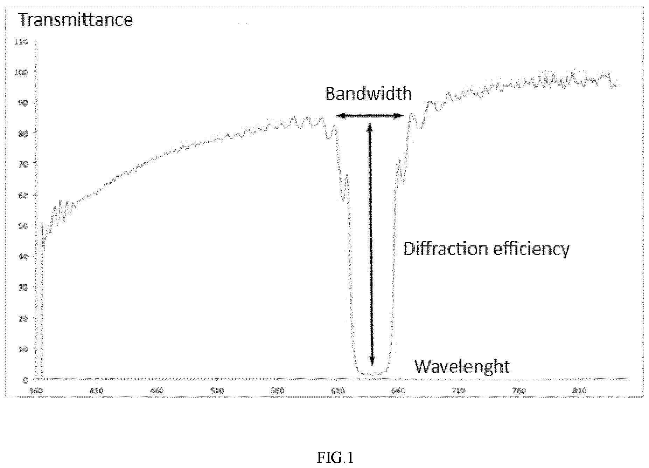

Depending on the spacing distribution of the Bragg structure that makes up the HOE, one wavelength or another will be diffracted in one direction or another. An example of the transmittance versus diffracted wavelength characteristic plot of an RHOE can be seen in FIG1. This figure shows an example of the design parameters that can be chosen when implementing an RHOE. These parameters are the wavelength ($\lambda$) or, in other words, the color to be diffracted, the bandwidth ($\Delta\lambda$), the amount of that color to be diffracted and the diffraction efficiency ($\eta$), i.e., the percentage to be diffracted with respect to the incident light.

In the present invention, transmission HOE (THOE), reflection HOE (RHOE) and a combination thereof, also referred to as hybrid HOE, are employed. HOEs may be recorded on any holographic recording material, such as photorefractive materials, which may include dichromated gelatins, photopolymers, photoresists, silver halides or *SILVER HALIDE SENTITIZED GELATIN* (SHSG). The thickness of each HOE may vary from 6 $\mu$m to 300 $\mu$m.

HOE's can be bonded directly onto the structure, sealed onto a glass or polymer backing, or bonded to a textile, composite, fiberglass, carbon fiber, metal, or resin backing, depending on the structure or unit to be camouflaged, whether it is a structure, building, ground motorized unit, aircraft, unmanned aircraft, ship, or infantry unit. Each HOE can be configured according to the needs to endow the entire structure with a particular camouflage pattern. The configurable properties in each HOE are as follows:

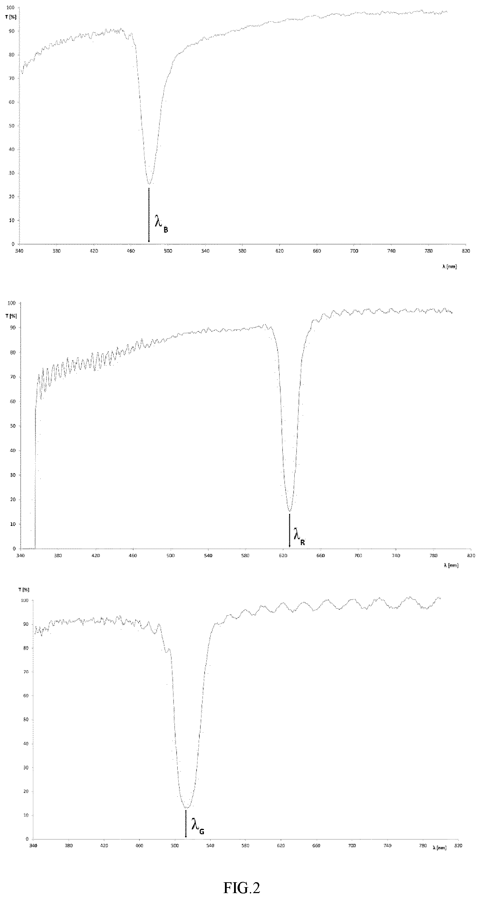

The wavelength (A) of the electromagnetic spectrum to be diffracted. In reflection holograms, we can select in the design the wavelength to diffract, i.e., we can choose the color to be diffracted by the HOE. This spectral selection can be single, each HOE diffracts one wavelength, or multiple, an HOE can diffract several wavelengths at the same time. The part of the electromagnetic spectrum to be covered may be the ultraviolet (UV), the visible spectrum and the infrared (IR) spectrum. If the reflecting HOE is tuned to diffract at a specific wavelength (e.g., the RGB in FIG.2, ($\lambda_B$, $\lambda_R$, $\lambda_G$), it will be transparent to the rest, a concept that will later be used for multilayer designs.

If the HOE is a transmission holographic element, the element can be designed to have a specific spatial frequency density. With this, we can vary the diffraction efficiency and the angle of diffracted orders as appropriate.

It is possible to select the diffraction efficiency ($\eta$) of each RHOE. Therefore, the percentage of reflectivity in the RHOE can be selected. This feature allows us to design RHOEs that can diffract a high percentage of the wavelength of the light they receive or decrease this "reflectance", being able to tune each HOE to the level of reflectivity of the surrounding environment where it will operate, avoiding reflections or excessive brightness in the unit that could give away its presence.

The bandwidth ($\Delta\lambda$) bandwidth can be selected, opting for HOE with a wider or narrower bandwidth. This spectral selectivity property will influence the number of layers in the structure, as well as the treatment of each wavelength or group of wavelengths independently from the rest.

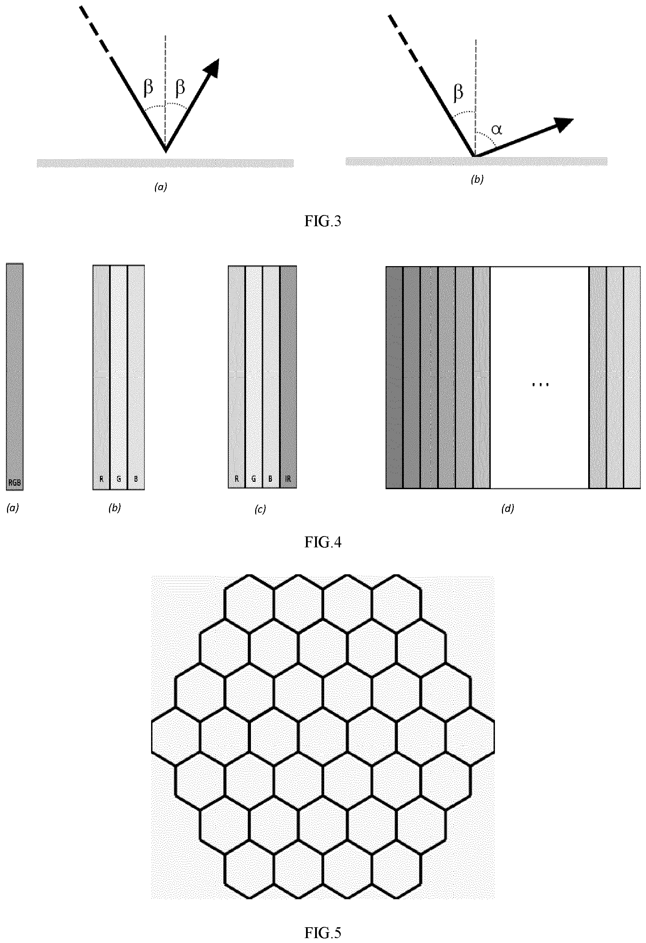

The present invention allows control of diffraction direction ($\alpha$). In HOEs, by using diffraction, rather than reflection, as a physical law, an RHOE can be designed to diffract the selected wavelength in the directions (angles, $\alpha$) desired, not being subject to the angular restrictions that Snell's law sets for the reflection of conventional optical elements. This property will allow the diffraction direction of the element to be chosen and adjusted so that the RHOE diffracts the nearest surroundings from any perspective, achieving optimized dynamic camouflage, as best observed in FIG.3.

An HOE can be designed with or without optical magnification factors (M), similar to concave and convex mirrors or converging and diverging lenses of conventional optics. If the hologram has no magnification factors, it will diffract the environment as it is, respecting the creation of the image in orientation, magnitude, and distance. On the other hand, if we provide the RHOE with magnification, the image formation will be distorted. This property can be designed according to the desired optical effect.

The invention is based on the development of lattice structures based on a basic optical element, a HOE, which we will call HOXEL (*HOLOGRAPHIC PIXEL*). Each HOXEL can be configured according to the above-mentioned properties, being able to select its diffraction wavelength, spatial frequency density, diffraction direction, diffraction efficiency, bandwidth, whether it has magnification or not, whether it is a single HOE or a multiplexed HOE, among others, according to the optical effect to be produced in it or the functionality to be obtained from the overall structure.

*Structure of a HOXEL*

Each HOXEL is composed of one or more HOE, forming a multilayer structure, which can have up to 35 layers. These layers are divided into two types: (a) additional optical elements and (b) RHOE multilayers, which are grouped in a structure called diffractive reflection block (DRB).

Each BRD is composed of one or more layers of RHOES, which will be selected according to the optical effect desired in the final structure. The objective of the BRD is to provide each HOXEL with the necessary optical properties. This section only specifies the possible combination of chromaticities of each of the layers, and each layer can individually have any other design possibility within the properties of a HOE previously mentioned (spatial frequency density, diffraction direction, diffraction efficiency, bandwidth, whether it has magnification or not, whether it is a single HOE or a multiplexed HOE, etc.). The simplest structure of a BRD, as shown in FIG.4(a), would be a single layer composed of a multiplexed RHOE for three wavelengths diffracting in blue (B), green (G) and red (R), forming an RGB optical element diffracting white light to diffract the color environment as we perceive it through the human eye.

The BRD may be formed by a multilayer structure of three HOE, as shown in FIG.4(b), each of which will diffract a different wavelength, R, G, B, achieving higher efficiency in each layer and obtaining as a whole the diffraction of white light that matches the required chromaticity. Another configuration of the BRD would be formed by a multilayer structure formed by 4 HOES, as shown in FIG.4(c), each of which will diffract a different wavelength, R, G, B and infrared (IR), thus achieving not only the appropriate chromaticity, but the diffraction of part of the infrared spectrum that gives the BRD effectiveness in low light environments, which require the use of night vision devices. Finally, the BRD block could be composed of a multilayer structure of a number of layers varying between one and 35 layers, as shown in FIG.4(d), which will be composed of HOE of a combination of the above mentioned properties, in order to provide the BRD block with a complex optical multifunctionality resulting from the superposition of layers, including diffraction of the full visible spectrum, as well as the ultraviolet (UV) and infrared (IR).

Each HOXEL may be composed of a BRD or a BRD and a multilayer structure of optical elements, which may be diffraction gratings, holographic lenses or polarizers. A multilayer structure of a HOXEL would be composed of a BRD with specific characteristics and one or several layers composed of diffraction gratings or one- or two-dimensional holographic lenses, which will add an image distortion to the BRD layer by the consequent diffraction in different directions of the different diffraction orders and wavelengths present in the light under which the device acts.

A second multilayer structure of a HOXEL would be composed of the previous structure (BRD plus diffraction gratings/holographic lenses) to which one or two layers of polarizers are attached. In the case of two layers, the polarizers would be crossed. The function of this or these new layers is not to allow the passage of light. That is why, in the case of two layers of polarizers, their polarization axes should be placed at 90° with respect to each other.

The overall functionality of each HOXEL, depending on the specific configuration of each of its parts, may be, on the one hand, to diffract light, normally natural light, in directions that conventional optics would not allow, without modifying the properties of the incident beam. That is, not adding convergence or divergence to the diffracted beam, maintaining the collimation of incident natural light, which would allow the formation of pseudoscopic images, but maintaining its scale, which would remain visible regardless of the distance from the observer.

A second functionality would be the generation of distorted pseudoscopic images, due to the conflation of the BRD block of magnifications in one or several of its RHOE layers, being able to function as holographic concentrators or scatterers. This configuration of each HOXEL in a meshed structure causes image distortion through optical pixelation when working together. A third functionality is the annexation of holographic lens layers or diffraction gratings, which would add to the BRD functionalities a chromatic dispersion that would in turn produce a chromatic pixelation in a meshed network of HOXELs, causing further image confusion and distortion.

In all these functional structures, each HOXEL will diffract the homochromacy of the surroundings, as well as its luminance level (brightness) which can be minimized in turn. The difference between configurations will only affect how it performs, whether all wavelengths in the same direction or in independent directions, as well as the parallelism of its beams, by means of an element with or without magnification that maintains collimation or, on the contrary, converges or diverges the direction of each monochromatic light beam.

The goal is to create as much optical confusion for the eye or optical remote sensing elements that make it difficult to locate and identify any object. A last global functionality of a HOXEL is presented when we add the polarizer layers on its back side. This configuration would cause the functionalities of the previous structures together with a blocking of any kind of visible and infrared spectrum radiation that could go towards the structure to be camouflaged. This configuration is specific in cases where it is desired to provide the unit to be camouflaged with a holographic shielding against directed energy laser weapons.

### Base form of each HOXEL

Each HOXEL can have two basic shapes. For simplicity, due to the way HOEs are implemented, the basic HOXEL can be circular in shape for very specific cases. However, the preferred shape of each HOXEL is hexagonal. The hexagonal shape is chosen for several reasons. On the one hand, with respect to fabrication, the construction of a HOE is done by a laser beam, which has a Gaussian shape. The hexagon represents the regular geometric figure with the largest area that fits the cross section of the beam (circular in shape), giving the HOE greater uniformity over its entire surface. On the other hand, with respect to the multiple configurations, the regular hexagon can cover a surface by means of a simple tessellation, without the need to resort to other geometric shapes for filling, so that a perfect mesh of hexagons can be implemented to provide the structure with a digital pattern that pixelates the optical effect. These two faculties are basic to simplify the fabrication of a HOXELS mesh.

The hexagon is also an efficient geometric figure, since it has a larger area for a given perimeter, thus minimizing the *border* effect between each HOXEL that could unmask the camouflage pattern. On the other hand, the hexagon, despite being a regular figure, in grouping causes a breakage of the basic shapes in the camouflage patterns, which serves to break the symmetry of any shape or structure. The fact that it is a regular figure allows HOXEL layers to be superimposed symmetrically, since a hexagonal figure can be constructed from a grouping of smaller hexagons. This is what makes it possible to design micro patterns and macro patterns, which provide the camouflage with a scale invariance that allows the camouflage pattern to maintain the effectiveness of the camouflage regardless of the distance from the observer. If we add to this fact, the ability of the hexagon to form real fractal structures, the hexagon is the best unitary form of each HOXEL on which to base the camouflage pattern.

The sizes of the basic HOXELs will have borders proportional to the size of the subject, unit or structure to be camouflaged. HOXELs may have an area between 1 mm$^2$ and 80,000 mm$^2$, which, under a fractal configuration, may in turn be the basis for larger compound HOXELS, which will be effective at greater viewing distances.

### Multi-HOXEL structures

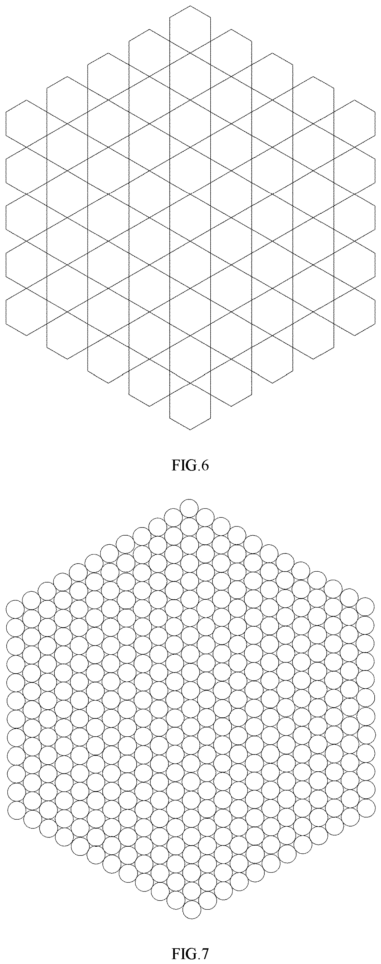

HOXELs can be grouped in different ways as appropriate to achieve the desired effect. Such groupings can be divided into two main classes, a simple grid and a composite or multilayer grid. Within simple meshing, hexagonal shaped HOXELs can be grouped in a regular tessellation as shown in FIG.5 or in a semi-regular tessellation as shown in FIG.6.

The regular tessellation is the basis for the arrangement of each HOXEL due to its capacity to cover any surface, providing the whole structure to be camouflaged with the designed optical effects. The arrangement of the HOXELs by means of the semi-regular hexagonal triangular tessellation will provide the structure with the possibility of designing a real fractal that will give it a scale invariance. This arrangement leaves triangular gaps that can be filled with other triangular HOXELs or remain unfilled, with the structure presenting triangles of the base color of the structure. The simple mesh structure of circular HOXELs will be arranged in a semi-regular tessellation as shown in FIG. 7. This arrangement has the same purpose as the semi-regular hexagonal tessellation, to be able to generalize fractal patterns.

Composite or multilayer gratings are based on the concept of superposition of optical effects. HOE is designed to diffract a specific wavelength with its corresponding bandwidth, being able to elaborate layers that diffract different wavelengths, therefore, as each layer is opaque to its design wavelength, but transparent to the rest of wavelengths, the optical effects of each layer can be superimposed.

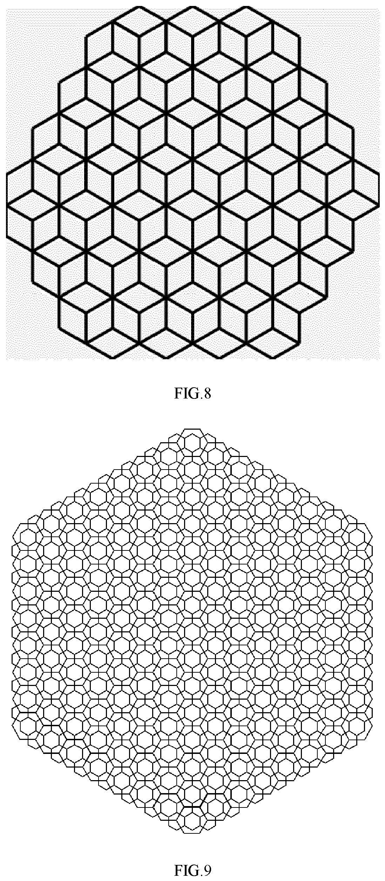

Within the composite meshes we have a superposition of two hexagonal tessellations of the same size as shown in FIG.8, a superposition of two or more hexagonal tessellations of different size as shown in FIG.9 and a superposition of seven hexagonal tessellations of the same size as shown in FIG.10. These multilayer tessellation structures are intended to realize complex holographic camouflage patterns by superimposing effects according to the properties of each HOXEL layer. In multilayer tessellations of different sizes, the size ratio of the HOXELs of each layer is 1/3, i.e., as we add layers, the HOXELs individually will have 3 times more area than that of the layer immediately below.

*Configuration of multi-HOXEL structures*

In the previous section, we discussed the properties of each HOE, as well as the different configurable characteristics of each HOE individually. In this section, based on these individual properties of each HOE, we will describe the different configurations that a grouping of HOXELs in a mesh can present. Within each mesh, the HOXELs can be grouped according to different configurations based on the aforementioned properties. These mesh configurations, as with the HOE properties discussed in the previous section, because they are independent optical configurations of each other, can be implemented individually or together in multiple configurations, superimposing the effects of each of them.

The HOXELs can all present the same diffraction direction ($\alpha$), all diffracting at the same angle and thus creating an overall visual effect of pseudoscopic imaging of the environment at scale 1:1.

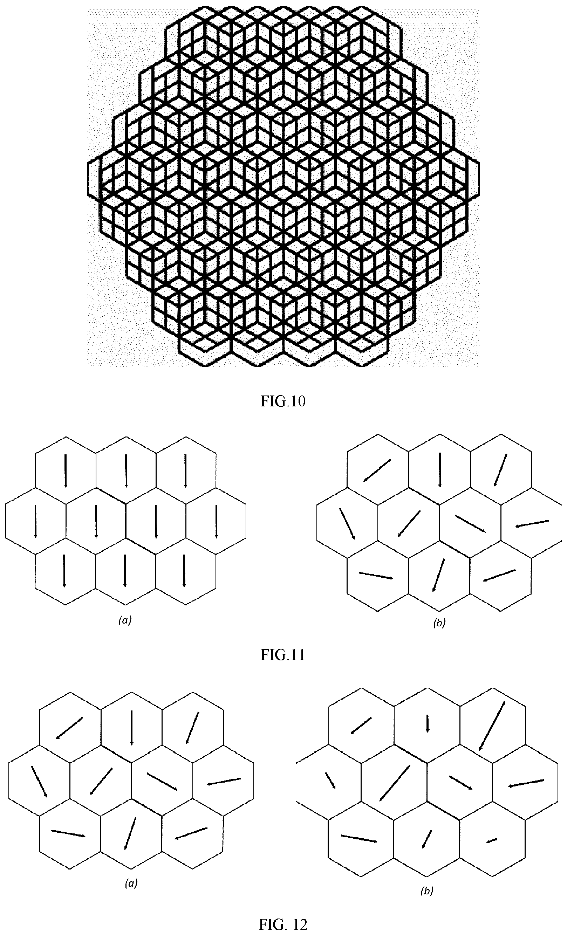

An example of such a configuration can be visualized in FIG.11(a).

In turn, as can be visualized in FIG.11(b), the lattice of HOXELs can present different diffraction directions ($\alpha$), diffracting each HOXEL at a different angle to adjacent or nearby HOXELs. This configuration will provide a digital camouflage or pixilation while respecting the chromaticity of the surroundings, but providing a break in shapes that distorts the overall diffracted image.

In the same way, HOXELs can be configured within a mesh with and without optical magnification (M), as shown in FIG.12. The configuration without optical magnification provides a diffraction that preserves the shape of the diffracted beam, usually a collimated beam if it is a natural light source such as the Sun, this fact provides a diffraction that preserves the scale proportions of the diffracted images, so that each diffraction per unit of HOXEL maintains the 1:1 dimension.

The meshing with different degrees of optical magnification in each HOXEL will produce a digital camouflage or pixelation that at the same time produces a distortion in the global diffracted image that leads to a breakage of shapes and a modification of the properties of the diffracted images. The images obtained by each HOXEL, depending on the configuration made to each optical unit, may be real or virtual images, straight (not inverted) or inverted and of greater or smaller size depending on the distance from the environment to the camouflage element, allowing a variability in the diffraction that allows the maintenance of the camouflage effectiveness when the unit is in motion, preserving at all times the homochromy with the environment.

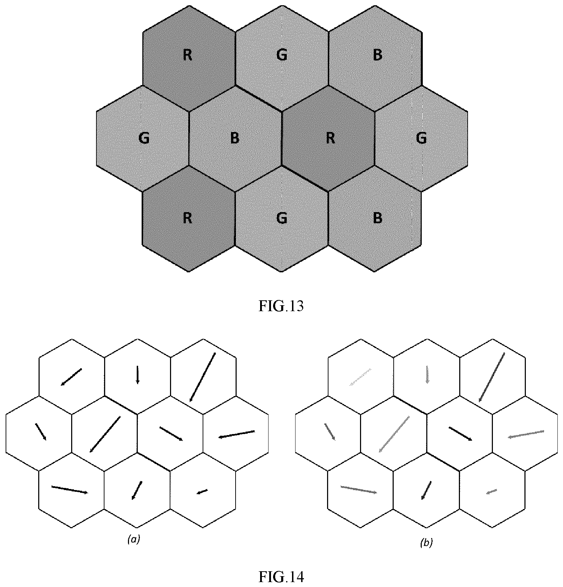

The HOXEL mesh can be designed as a mosaic of chromatic elements. Until now, in all configurations, each HOXEL had the same RGB chromaticity that allowed the diffraction of a full-color image of the environment. In turn, it is possible to design a mesh with a chromatic configuration of HOXELs independent and different from the adjacent HOXELs, generating an RGB mosaic analogous to the pixelation of a monitor. This configuration, will consist of implementing each HOXEL with a different diffraction wavelength ($\lambda$) to the adjacent HOXELs, as can be seen in FIG.13, when implemented in a composite manner by superimposing other configurations such as a configuration with and without optical magnification or with different diffraction directions, it will produce a digital camouflage or pixelation that provides distortion in the diffracted image, not only in shape, size and reflected environment, but also a chromatic pixelation similar to traditional camouflage patterns, which produce more confusion to the structure.

In this configuration, in order not to lose effectiveness, the proportionality of the RGB chromaticity must be maintained and each hexagonal vertex must be the intersection of three different wavelengths, one for red chromaticity (R), one for green chromaticity (G) and one for blue chromaticity (B). On the other hand, so far, all HOXEL configurations had the same diffraction efficiency ($\eta$), i.e., they diffracted the same percentage of incident light. It is possible to implement a configuration that has variable diffraction efficiency, i.e., each HOXEL has a diffraction efficiency different from the adjacent ones, as can be seen in FIG.14.

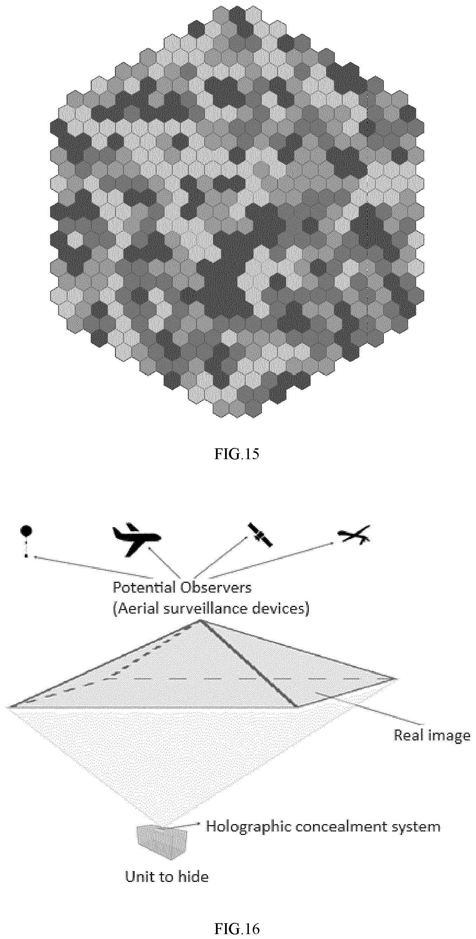

As the mesh has a different diffraction efficiency for each HOXEL, a digital or pixelated camouflage is implemented in terms of the brightness of each HOXEL. This, together with other configurations, would optimize the effectiveness of the global camouflage to an adaptability of luminance with the environment, in which each object, depending on its nature, presents an independent level of absorption or reflectivity. All these possible configurations, in turn, can be grouped together. Traditional camouflage patterns, in order to maintain their effectiveness at short and long distances, grouped the pixels into macro and microstructures. Similarly, meshing can be configured with macro and micro patterns composed of groupings of HOXELs with the same optical properties, as can be seen in FIG.15.

This configuration can be implemented to provide the structure with complex macro (for long observation distances) and micro (for small observation distances) configurations, composed of HOXEL clusters with optical properties composed of several design possibilities.

This invention represents a further step in the optimization of traditional camouflage systems. With its implementation, it covers an atmospheric window not covered in terms of countermeasures with remote sensing systems, the optical window. This invention offers the advantages of the design and implementation of optical camouflage systems to operate in visible light, infrared camouflage systems to operate in low light conditions, systems adaptive to the chromatic and dynamic conditions of a heterogeneous system such as nature, adapting to the changing coloration and movement conditions of any natural environment. At the same time, it is a passive system, requiring no energy for its correct functioning, it is light, inexpensive, easy to implement, can be easily replaced in case of damage, is immune to electromagnetic radiation from radiofrequency directed energy weapons, making it robust. It is compatible with traditional shielding systems, as well as remote sensing countermeasures systems from other atmospheric windows such as thermal camouflage systems or *Stealth* systems.

It can be designed ad-hoc for the required conditions, either under the conditions of the target environment and the unit to be implemented, naval units, air, unmanned systems, structures, or buildings and even infantry. A digital or pixelated pattern can be implemented to superimpose different optical effects and cause a breakage of shapes, scale invariance with fractal properties to maintain its effectiveness regardless of the position of the observer to optimize the purpose of a good camouflage system, to delay the location and identification of operational units to almost make them look like structures of the environment, going unnoticed by the optical remote sensing systems.

*Holographic concealment system*

The holographic cloaking system consists of three blocks: (a) hologram with diffusing pattern; (b) light power supply; and (c) optical image modification system.

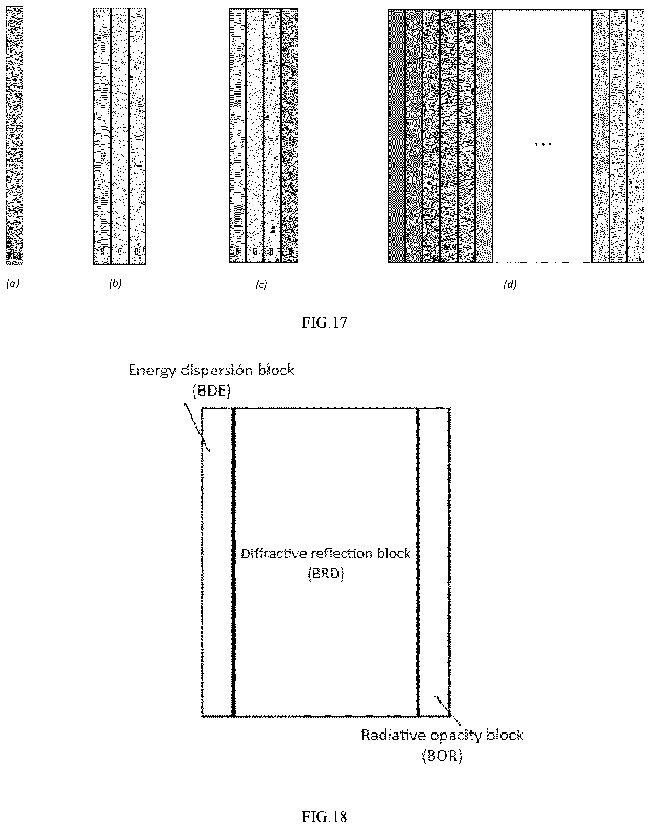

The first part (the hologram with the diffusing pattern) consists of a hologram by transmission (or reflection) of a given diffusing object. This hologram may be single or multi-layered, depending on the specifications to be developed according to the optical effect to be produced. The most basic configuration, *Figure 17(a),* consists of a layer in which a diffusive diffractive pattern (hologram) is stored, which can be monochromatic or a multichromatic pattern stored by means of spectral multiplexing techniques that provide the hologram with an RGB pattern that can reproduce any chromatic need that may be required. A second configuration consists of a multilayer system, *Figure 17 (b) (c) (d)*, which will vary from 3 to 30 layers, depending on the spectral needs required for its operation. This configuration is intended to provide the system with a high spectral capacity covering the ultraviolet, visible, and infrared spectra.

A second part consists of a coherent beam illumination source that allows the actual image to be read and displayed. Such an illumination source is a high-power illumination source and may be composed of a monochromatic source or of several light sources generating a polychromatic beam. The choice of the wavelength or spectrum of wavelengths of the illumination system will determine the band of the spectrum (ultraviolet, visible, or infrared) that the real projected image will have, in order to be able to tune the occultation in a specific spectral band according to needs.

The third part consists of an optical image manipulation system consisting of various optical elements (convergent lenses, divergent lenses, mirrors, diffraction gratings, holographic lenses, holographic mirrors, etc.) that make up an optical image generation system. This optical image modification system will modify the geometrical characteristics of the real image, which can be modified according to the required needs, varying the focal distance, the solid angle of the image vision, the size, or the shape. With this, the real image can be placed at the desired height so that, on the one hand, the system has the necessary effectiveness and, on the other hand, does not affect its own units operating at a lower height. It is also possible to vary the angular coverage of the system by expanding the solid angle of the image display and thus widening the solid angle or masking range.

The basic holographic cloaking system can be extended by realizing more complex configurations based on a multiple cloaking system. Such a configuration will result from the addition to a complex system of single occultation subsystems with the objective of providing the system with additive multi-functionality based on the individual systems. This will make it possible to extend for example the spectral range of performance, illuminance levels per unit solid angle, angular range of coverage, among others.

*Holographic defense system against directed energy laser systems*

The invention, like the holographic crypsis systems mentioned above, will be composed of **HOXELS (HOLOGRAPHIC PIXEL)** as the basic unit. Each HOXEL will be composed of a multilayer structure, which in turn will be composed of three blocks, the energy dispersion block (BDE), the diffractive reflection block (BRD) and the radiative opacity block (BOR), as best seen in Figure 18.

A first block, or energy dispersion block (EDB) would consist of one or two layers which would be composed of a two-dimensional diffraction grating, a two-dimensional holographic diffraction grating or holographic lenses. The function of these layers is to chromatically scatter the electromagnetic beam (in the case of a multispectral beam). If the structure uses holographic lenses, these will act in a divergent way, not only supplying chromatic dispersion but also greater spatial dispersion. With this measure, we considerably decrease the energy per unit area, since the energy per unit area of the multispectral beam is greater than the energy per unit area of each monochromatic beam separately since each spectral component will be diffracted in a different direction and therefore will not focus (or incident) in the same place.

A second block, or diffractive reflection block (BRD), like the holographic crypsis systems, would be composed of a multilayer structure of three HOE, each of which will diffract a different wavelength, R, G, B, achieving greater efficiency in each layer and obtaining as a whole the diffraction of white light that adapts to the required chromaticity. Another configuration of the BRD would be formed by a multilayer structure consisting of 4 HOES, each of which will diffract a different wavelength, R, G, B and infrared (IR), thus achieving not only the appropriate chromaticity, but the diffraction of part of the infrared spectrum that gives the BRD effectiveness in low light environments, which require the use of night vision devices. Finally, the BRD block could be composed of a multilayer structure with a number of layers varying between one and 30 layers, which will be composed of HOE of a combination of the above-mentioned properties, in order to provide the BRD block with a complex optical multifunctionality resulting from the superposition of layers, including the diffraction of the entire visible spectrum, as well as the ultraviolet (UV) and infrared (IR).

The purpose of this diffractive reflection block (DRB) is, once the incident beam is spectrally separated, to selectively diffract each of its components totally or partially away from the structure to be protected, further decreasing the energy per unit area of each spectral component. Therefore, the diffraction efficiency of each HOE must be maximized in order to diffract the highest percentage of incident radiation.

The HOXEL would be composed of a final block of radiative opacity (BOR) composed of one or more layers of polarizers. The multilayers would be composed of pairs of crossed linear polarizers (90°) tuned to act at different wavelengths of the visible and infrared spectrum.

Polarization is a characteristic of any transverse wave, it is defined as the geometric figure described in time, traced by the tip of the electric field vector. Because an electromagnetic wave is a transverse wave, any electromagnetic wave can be polarized. This is why the waves of directed energy systems can be polarized. This last block tries to block the incident transverse wave, not diffracted by the previous blocks will be blocked, thus preventing it from reaching the fuselage of the unit to be protected. In the case of multilayer, the polarizers would be crossed. The function of this or these new layers is to prevent the passage of the wave. That is why, in case of pairs of polarizer layers, their polarization axes should be placed at 90° with respect to each other.

The objective of the invention is to delay the effectiveness of directed energy systems operating in the visible and infrared spectrum range, giving valuable time for the unit to execute its mission or to be able to change course before it is shot down.

**Claims**

1. A holographic camouflage or concealment system with a meshed structure formed by:

   holographic optical elements configured according to at least one of the following parameters:
   (a) the wavelength ($\lambda$) or colour to be diffracted;
   (b) the bandwidth ($\Delta\lambda$) or amount of that colour to be diffracted; (c) the diffraction efficiency ($\eta$) or percentage to be diffracted with respect to incident light; (d) the direction of diffraction ($\alpha$); and (e) presence or absence of optical magnification (M);
   in such a way that said holographic optical elements form one or more diffractive reflection blocks, whose optical properties are selected according to the optical effect required by a predetermined camouflage or concealment pattern in the visible spectrum and/or in the near infrared and/or in the ultraviolet
   **characterised in that**,
   the meshed structure is a simple structure formed by holographic optical elements with a hexagonal geometry groupable in a regular or semi-regular tessellation, forming fractal structures;

or
the meshed structure is a fractal structure composed by superimposing two or more hexagonal tessellations, of equal size or of different size; the multilayer tessellation structure being configured to realize holographic camouflage patterns by superimposing optical effects according to the optical properties of each layer of holographic optical elements.

2. The holographic camouflage system according to claim 1, wherein the holographic optical elements are selected from transmission holographic optical elements, reflection holographic optical elements, or a combination thereof.

3. The holographic camouflage system according to any one of claims 1 or 2, wherein the holographic optical elements are of a photorefractive material selected from dichromated gelatines, photopolymers, photoresins, silver halides, or silver halide synthesized gelatine; and the thicknesses of each holographic optical element are between 6 $\mu$m and 300 $\mu$m.

4. The holographic camouflage system according to any one of claims 1 to 3, which is directly adhered on a structure to be camouflaged; or sealed on a glass or polymer support; or adhered to a textile support, composite, fiberglass, carbon fibre, metal, to an elastic support or to a resin.

5. The holographic camouflage system according to claim 1 to 4 comprising one or more additional optical elements selected from diffraction gratings, holographic lenses, polarizers, or a combination thereof.

6. The system according to any one of the preceding claims wherein the holographic optical elements each have a circular or hexagonal geometry with an area between 1 mm$^2$ and 80,000 mm$^2$.

7. The system according to claim 1, wherein the meshed structure has a diffraction direction ($\alpha$), whereby all holographic optical elements diffract at the same angle and thereby creating a visual effect in overall pseudoscopic imaging of the scaled environment 1:1; or the meshed structure presents different diffraction directions ($\alpha$), whereby each holographic optical element diffracts at a different angle to the adjacent or nearby holographic optical elements, so as to provide a digital camouflage or pixelation respecting the chromaticity of the environment, but providing a break of shapes that distorts the overall diffracted image; and where the meshed structure is configured with and without optical magnification (M).

8. A method of holographic camouflage or concealment comprising:

establish a pattern of camouflage or concealment in the visible spectrum and/or in the near infrared and/or in the ultraviolet; configure holographic optical elements according to at least one of the following parameters: (a) the wavelength ($\lambda$) or colour to be diffracted; (b) the bandwidth ($\Delta\lambda$) or amount of that colour to be diffracted; (c) the diffraction efficiency ($\eta$) or percentage to be diffracted with respect to incident light; (d) the direction of diffraction ($\alpha$); and (e) presence or absence of optical magnification (M); group one or more holographic optical elements in one or more diffractive reflection blocks, whose optical properties are selected according to the optical effect required by the previously established camouflage or concealment pattern; and distribute the diffractive reflection blocks forming a meshed structure with a fractal structure; **characterised in that**, the meshed structure is a simple structure formed by holographic optical elements with a hexagonal geometry groupable in a regular or semi-regular tessellation, forming fractal structures; or the meshed structure is a fractal structure composed by superimposing two or more hexagonal tessellations of equal size or different size; the multilayer tessellation structure being configured to realize holographic camouflage patterns by superimposing optical effects according to the optical properties of each layer of holographic optical elements.

9. The holographic camouflage method according to claim 10 comprising including one or more additional optical elements selected from diffraction gratings, holographic lenses, polarizers, or a combination thereof.

10. The method according to claim 8, wherein the meshed structure has a diffraction direction ($\alpha$), whereby all holographic optical elements diffract at the same angle and thereby creating a visual effect in overall pseudoscopic imaging of the scaled environment 1:1; or the meshed structure presents different diffraction directions ($\alpha$), whereby each holographic optical element diffracts at a different angle to the adjacent or nearby holographic optical elements, so as to provide a digital camouflage or pixelation respecting the chromaticity of the environment, but providing a break of shapes that distorts the overall diffracted image; and where the meshed structure is configured with and without optical magnification (M).

11. Use of the system or method according to any one of the preceding claims as: camouflage system; visual integration system to reduce visual contamination; camouflage system in uniforms; concealment system; holographic advertising or marketing system; and optical shielding against directed energy laser weapons.

**Patentansprüche**

1. Ein holografisches Tarn- oder Verdeckungssystem mit einer Netzstruktur, die aus:

    holographische optische Elemente, die nach mindestens einem der folgenden Parameter konfiguriert sind:
    (a) die Wellenlänge ($\lambda$) oder die Farbe, die gebeugt werden soll; b) die Bandbreite ($\Delta\lambda$) oder die Menge dieser Farbe, die gebeugt werden soll; c) die Beugungseffizienz ($\eta$) oder der Prozentsatz, der im Verhältnis zum einfallenden Licht gebeugt werden soll; d) die Beugungsrichtung ($\alpha$); und e) das Vorhandensein oder Fehlen einer optischen Vergrößerung (M);
    in der Weise, dass die holografischen optischen Elemente einen oder mehrere beugende Reflexionsblöcke bilden, deren optische Eigenschaften je nach dem optischen Effekt ausgewählt werden, der durch ein vorbestimmtes Tarn- oder Verdeckungsmuster im sichtbaren Spektrum und/oder im nahen Infrarot und/oder im Ultraviolett erforderlich ist
    **dadurch gekennzeichnet**,
    Die Netzstruktur ist eine einfache Struktur, die aus holografischen optischen Elementen mit hexagonaler Geometrie besteht, die in einem regelmäßigen oder halbregelmäßigen Mosaik gruppierbar sind und fraktale Strukturen bilden; oder
    die Maschenstruktur eine fraktale Struktur ist, die durch Überlagerung von zwei oder mehr sechseckigen Mosaiken gleicher Größe oder unterschiedlicher Größe zusammengesetzt ist; die mehrschichtige Mosaikstruktur so konfiguriert ist, dass sie holografische Tarnmuster durch Überlagerung optischer Effekte entsprechend den optischen Eigenschaften jeder Schicht holografischer optischer Elemente realisiert.

2. Das holographische Tarnsystem nach Anspruch 1, wobei die holographischen optischen Elemente aus holographischen Transmissions- und Reflexionsoptikelementen oder einer Kombination davon ausgewählt sind.

3. Das holografische Tarnsystem nach einem der Ansprüche 1 oder 2, wobei die holografischen optischen Elemente aus einem fotobrechenden Material bestehen, das aus dichroitischen Gelatinen, Fotopolymeren, Fotoharzen, Silberhalogeniden oder synthetisierter Silberhalogenidgelatine ausgewählt ist; und die Dicke jedes holografischen optischen Elements zwischen 6 $\mu$m und 300 $\mu$m liegt.

4. Das holografische Tarnsystem nach einem der Ansprüche 1 bis 3, das direkt auf eine zu tarnende Struktur geklebt wird; oder auf einem Träger aus Glas oder Polymer versiegelt wird; oder auf einem Träger aus Textil, Verbundwerkstoff, Fiberglas, Kohlefaser, Metall, einem elastischen Träger oder einem Harz geklebt wird.

5. Das holografische Tarnsystem nach Anspruch 1 bis 4 umfasst ein oder mehrere zusätzliche optische Elemente, ausgewählt aus Beugungsgittern, holografischen Linsen, Polarisatoren oder einer Kombination davon.

6. Das System nach einem der vorhergehenden Ansprüche, wobei die holografischen optischen Elemente jeweils eine kreisförmige oder hexagonale Geometrie mit einer Fläche zwischen 1 mm$^2$ und 80.000 mm$^2$ aufweisen.

7. Das System nach Anspruch 1, wobei die Maschenstruktur eine Beugungsrichtung ($\alpha$) aufweist, wobei alle holografischen optischen Elemente im gleichen Winkel beugen und dadurch einen visuellen Effekt in der pseudoskopischen Gesamtabbildung der skalierten Umgebung im Verhältnis 1:1 erzeugen; oder
die Maschenstruktur unterschiedliche Beugungsrichtungen ($\alpha$) aufweist, wobei jedes holografische optische Element in einem anderen Winkel als die benachbarten oder nahegelegenen holografischen optischen Elemente beugt, um eine digitale Tarnung oder Pixelierung zu erzeugen, die Farbart der Umgebung berücksichtigt, aber einen Formbruch erzeugt, der das gesamte Beugungsbild verzerrt; und wobei die Maschenstruktur mit und ohne optische Vergrößerung (M) konfiguriert ist.

8. Ein Verfahren zur holografischen Tarnung oder Verschleierung, umfassend:

    Erstellen eines Tarn- oder Verschleierungsmusters im sichtbaren Spektrum und/oder im nahen Infrarot und/oder im Ultraviolett;
    Konfigurieren holografischer optischer Elemente nach mindestens einem der folgenden Parameter:

(a) die zu beugende Wellenlänge ($\lambda$) oder Farbe; (b) die Bandbreite ($\Delta\lambda$) oder den Anteil dieser Farbe; (c) die Beugungseffizienz ($\eta$) oder den Prozentsatz des einfallenden Lichts; (d) die Beugungsrichtung ($\alpha$); und (e) Vorhandensein oder Fehlen einer optischen Vergrößerung (M);

Gruppieren eines oder mehrerer holografischer optischer Elemente in einem oder mehreren diffraktiven Reflexionsblöcken, deren optische Eigenschaften entsprechend dem gewünschten optischen Effekt des zuvor erstellten Tarn- oder Verschleierungsmusters ausgewählt werden; und

Verteilen der diffraktiven Reflexionsblöcke zu einer Maschenstruktur mit fraktaler Struktur;

**gekennzeichnet dadurch, dass**

die Maschenstruktur eine einfache Struktur aus holografisch-optischen Elementen mit hexagonaler Geometrie ist, die in einer regelmäßigen oder halbregelmäßigen Tessellation gruppierbar sind und fraktale Strukturen bilden;

oder

die Maschenstruktur eine fraktale Struktur ist, die durch die Überlagerung zweier oder mehrerer hexagonaler Tessellationen gleicher oder unterschiedlicher Größe gebildet wird; die mehrschichtige Tessellationsstruktur ist so konfiguriert, dass sie holografische Tarnmuster durch Überlagerung optischer Effekte entsprechend den optischen Eigenschaften jeder Schicht holografisch-optischer Elemente erzeugt.

9. Das holografische Tarnverfahren nach Anspruch 10 umfasst die Einbeziehung eines oder mehrerer zusätzlicher optischer Elemente, ausgewählt aus Beugungsgittern, holografischen Linsen, Polarisatoren oder einer Kombination davon.

10. Das Verfahren nach Anspruch 8, wobei die Maschenstruktur eine Beugungsrichtung ($\alpha$) aufweist, bei der alle holografisch-optischen Elemente im gleichen Winkel beugen und dadurch einen visuellen Effekt in der pseudoskopischen Gesamtabbildung der skalierten Umgebung im Verhältnis 1:1 erzeugen;

oder

die Maschenstruktur weist unterschiedliche Beugungsrichtungen ($\alpha$) auf, wobei jedes holografisch-optische Element in einem anderen Winkel als die benachbarten oder nahegelegenen holografisch-optischen Elemente beugt, um eine digitale Tarnung oder Pixelierung zu erzeugen, die Farbart der Umgebung berücksichtigt, aber einen Formbruch erzeugt, der das gesamte Beugungsbild verzerrt;

und wobei die Maschenstruktur mit und ohne optische Vergrößerung (M) konfiguriert ist.

11. Verwendung des Systems oder Verfahrens nach einem der vorhergehenden Ansprüche als: Tarnsystem; visuelles Integrationssystem zur Reduzierung visueller Kontamination; Tarnsystem in Uniformen; Verschleierungssystem; holografisches Werbe- oder Marketingsystem; und optische Abschirmung gegen Laserwaffen mit gerichteter Energie.

**Revendications**

1. Système de camouflage ou de dissimulation holographique doté d'une structure maillée formée par :

des éléments optiques holographiques configurés en fonction d'au moins un des paramètres suivants :

(a) la longueur d'onde ($\lambda$) ou la couleur à diffracter ; (b) la largeur de bande ($\Delta\lambda$) ou la quantité de cette couleur à diffracter ; (c) l'efficacité de la diffraction ($\eta$) ou le pourcentage à diffracter par rapport à la lumière incidente ; (d) la direction de la diffraction ($\alpha$) ; et (e) la présence ou l'absence d'un grossissement optique (M) ;

de telle sorte que lesdits éléments optiques holographiques forment un ou plusieurs blocs de réflexion diffractants, dont les propriétés optiques sont sélectionnées en fonction de l'effet optique requis par un motif de camouflage ou de dissimulation prédéterminé dans le spectre visible et/ou dans le proche infrarouge et/ou dans l'ultraviolet

caractérisé en cela,

la structure maillée est une structure simple formée d'éléments optiques holographiques à géométrie hexagonale pouvant être regroupés en une tessellation régulière ou semi-régulière, formant des structures fractales ;

ou

la structure maillée est une structure fractale composée par la superposition de deux tessellations hexagonales ou plus, de taille égale ou différente ; la structure de tessellation multicouche est configurée pour réaliser des motifs de camouflage holographiques en superposant des effets optiques en fonction des propriétés optiques de chaque couche d'éléments optiques holographiques.

2. Système de camouflage holographique selon la revendication 1, dans lequel les éléments optiques holographiques sont choisis parmi les éléments optiques holographiques à transmission, les éléments optiques holographiques à réflexion ou une combinaison de ceux-ci.

**3.** Système de camouflage holographique selon l'une quelconque des revendications 1 ou 2, dans lequel les éléments optiques holographiques sont constitués d'un matériau photoréfractif choisi parmi les gélatines bichromatées, les photopolymères, les photorésines, les halogénures d'argent ou les gélatines synthétisées aux halogénures d'argent ; et les épaisseurs de chaque élément optique holographique sont comprises entre 6 μm et 300 μm.

**4.** Système de camouflage holographique selon l'une quelconque des revendications 1 à 3, directement collé sur une structure à camoufler ; ou scellé sur un support en verre ou en polymère ; ou collé sur un support textile, composite, en fibre de verre, en fibre de carbone, en métal, sur un support élastique ou sur une résine.

**5.** Le système de camouflage holographique selon les revendications 1 à 4 comprend un ou plusieurs éléments optiques supplémentaires choisis parmi les réseaux de diffraction, les lentilles holographiques, les polariseurs ou une combinaison de ceux-ci.

**6.** Le système selon l'une des revendications précédentes dans lequel les éléments optiques holographiques ont chacun une géométrie circulaire ou hexagonale avec une surface comprise entre 1 mm$^2$ et 80 000 mm$^2$.

**7.** Le système selon la revendication 1, dans lequel la structure maillée a une direction de diffraction ($\alpha$), de sorte que tous les éléments optiques holographiques se diffractent au même angle, créant ainsi un effet visuel dans l'imagerie pseudoscopique globale de l'environnement à l'échelle 1:1 ; ou la structure maillée présente différentes directions de diffraction ($\alpha$), de sorte que chaque élément optique holographique diffracte à un angle différent des éléments optiques holographiques adjacents ou proches, afin de fournir un camouflage numérique ou une pixellisation respectant la chromaticité de l'environnement, mais offrant une rupture de formes qui déforme l'image diffractée globale ; et où la structure maillée est configurée avec et sans grossissement optique (M).

**8.** Méthode de camouflage ou de dissimulation holographique comprenant :

établir un modèle de camouflage ou de dissimulation dans le spectre visible et/ou dans le proche infrarouge et/ou dans l'ultraviolet ; configurer les éléments optiques holographiques en fonction d'au moins un des paramètres suivants : (a) la longueur d'onde ($\lambda$) ou la couleur à diffracter ; (b) la largeur de bande ($\Delta\lambda$) ou la quantité de cette couleur à diffracter ; (c) l'efficacité de la diffraction ($\eta$) ou le pourcentage à diffracter par rapport à la lumière incidente ; (d) la direction de la diffraction ($\alpha$) ; et (e) la présence ou l'absence d'un grossissement optique (M) ; regrouper un ou plusieurs éléments optiques holographiques dans un ou plusieurs blocs de réflexion diffractifs, dont les propriétés optiques sont sélectionnées en fonction de l'effet optique requis par le motif de camouflage ou de dissimulation préalablement établi ; et répartir les blocs de réflexion diffractifs de manière à former une structure maillée avec une structure fractale ; caractérisé en cela, la structure maillée est une structure simple formée d'éléments optiques holographiques à géométrie hexagonale pouvant être regroupés en une tessellation régulière ou semi-régulière, formant des structures fractales ; ou la structure maillée est une structure fractale composée par la superposition de deux ou plusieurs tesselles hexagonales de taille égale ou différente ; la structure de tessellation multicouche est configurée pour réaliser des motifs de camouflage holographiques par la superposition d'effets optiques en fonction des propriétés optiques de chaque couche d'éléments optiques holographiques.

**9.** La méthode de camouflage holographique selon la revendication 10 comprend un ou plusieurs éléments optiques supplémentaires choisis parmi les réseaux de diffraction, les lentilles holographiques, les polariseurs ou une combinaison de ceux-ci.

**10.** Méthode selon la revendication 8, dans laquelle la structure maillée a une direction de diffraction (a) dans laquelle tous les éléments optiques holographiques diffractent au même angle, créant ainsi un effet visuel dans l'imagerie pseudoscopique globale de l'environnement à l'échelle 1:1 ; ou la structure maillée présente différentes directions de diffraction ($\alpha$), de sorte que chaque élément optique holographique diffracte à un angle différent des éléments optiques holographiques adjacents ou proches, de manière à fournir un camouflage numérique ou une pixellisation respectant la chromaticité de l'environnement mais offrant une rupture de formes qui déforme l'image diffractée globale ; et où la structure maillée est configurée avec et sans grossissement optique (M).

**11.** Utilisation du système ou de la méthode selon l'une quelconque des revendications précédentes comme : système de camouflage ; système d'intégration visuelle pour réduire la contamination visuelle ; système de camouflage dans les uniformes ; système de dissimulation ; système de publicité ou de marketing holographique ; et bouclier optique contre les armes laser à énergie dirigée.

FIG.1

FIG.2

EP 4 300 028 B1

FIG.3

FIG.4

FIG.5

FIG.6

FIG.7

FIG.8

FIG.9

FIG.10

(a)

(b)

FIG.11

(a)

(b)

FIG. 12

FIG.13

(a)                                    (b)

FIG.14

FIG.15

FIG.16

FIG.17

Energy dispersión block
(BDE)

Diffractive reflection block
(BRD)

Radiative opacity block
(BOR)

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4025388 C1
- US 9025226 B2
- EP 3187815 B1
- US 9062938 B1
- US 5077101 A
- US 20090313740 A1
- US 20100288116 A1
- GB 2362283 A
- WO 2016078987 A1
- US 20120120148797 A1
- WO 2007084148 A2
- US 9175930 B1
- US 20120120132063 A1
- US 5144877 A
- US 20150268003 A1
- US 20210227677 A1
- US 2015268003 A1, BAZINSKI STEVE NORMAN
- US 5985381 A, CONNER KYLE HENRY
- RU 27949 U1

**Non-patent literature cited in the description**

- **ZENG GENG et al.** Design of low-cost photonic crystal based three-dimensional invisibility cloak. *MICRO- AND NANOTECHNOLOGY SENSORS, SYSTEMS, AND APPLICATIONS III, SPIE, 1000 20TH ST. BELLINGHAM WA 98225-6705 USA*, 13 May 2011, vol. 8031 (1), 1-6
- Five beam holographic lithography for simultaneous fabrication of three-dimensional photonic crystal templates and line defects using phase tunable diffractive optical element. **YUANKUN LIN et al.** OPTICS EXPRESS. OPTICAL SOCIETY OF AMERICA, 14 September 2009, vol. 17, 16625-16631
- Plasmonic Metasurfaces for Simultaneous Thermal Infrared Invisibility and Holographic Illusion. **XIN XIE et al.** ADVANCED FUNCTIONAL MATERIALS. WILEY-VC H VERLAG GMBH & CO. KGAA, 31 January 2018, vol. 28